# EUROPÄISCHE PATENTSCHRIFT

(11) **EP 3 589 839 B1**
(45) Veröffentlichungstag und Bekanntmachung des Hinweises auf die Patenterteilung: **03.08.2022**
(21) Anmeldenummer: 18707704.5
(22) Anmeldetag: 26.02.2018
(51) Int. Cl.: F03D 1/06, F03D 80/00, F03D 80/70, F16H 1/32

(54) **VERSTELLEINHEIT FÜR EINE AZIMUTVERSTELLUNG UND/ODER FÜR EINE PITCHVERSTELLUNG EINER WINDENERGIEANLAGE UND VERFAHREN**
ADJUSTMENT UNIT FOR AZIMUTH ADJUSTMENT AND/OR PITCH ADJUSTMENT OF A WIND TURBINE, AND METHOD
UNITÉ DE RÉGLAGE POUR RÉGLER L'AZIMUT ET/OU LE PAS D'UNE ÉOLIENNE ET PROCÉDÉ

(30) Priorität: 03.03.2017 DE 102017104474
(43) Veröffentlichungstag der Anmeldung: 08.01.2020
(73) Patentinhaber: Wobben Properties GmbH, 26607 Aurich (DE)
(72) Erfinder: GUDEWER, Wilko, 26506 Norden (DE); JEPSEN, Torsten, 26603 Aurich (DE)
(74) Vertreter: Eisenführ Speiser
(86) Internationale Anmeldenummer: PCT/EP2018/054641
(87) Internationale Veröffentlichungsnummer: WO 2018/158180

(56) Entgegenhaltungen:
- EP-A1- 2 960 495
- WO-A1-2010/079375
- JP-A- 2005 069 073
- PL-B1- 203 086

## Beschreibung

Die Erfindung betrifft eine Verstelleinheit für eine Azimutverstellung und/oder für eine Pitchverstellung einer Windenergieanlage, eine Verstellvorrichtung, eine Pitchverstellvorrichtung, eine Azimutverstellvorrichtung, eine Windenergieanlage sowie Verfahren zur Rotorblattverstellung und Windrichtungsnachführung sowie die Verwendung einer Verstelleinheit und/oder einer Verstellvorrichtung.

Windenergieanlagen sind allgemein bekannt. Die dominierende Bauform von Windenergieanlagen ist derzeit die dreiblättrige Horizontalachsen-Windenergieanlage, bei der sich der Rotor im Betrieb auf der Luvseite befindet und deren Maschinenhaus auf dem Turm angeordnet ist und der Windrichtung aktiv, insbesondere durch eine Azimutverstelleinheit, nachgeführt wird. Ferner ist es üblich, dass die Rotorblätter um eine Längsachse mittels einer Pitchverstelleinheit gedreht werden können. Auch allgemein bekannt ist die Verwendung von Zahnradanordnungen für Drehverbindungen bei Windenergieanlagen an den Stellen, an denen Bauteile rotatorisch relativ zueinander bewegt werden, und insbesondere, wo eine Übersetzung von einem ersten rotierenden Bauteil zu einem zweiten rotierenden Bauteil realisiert werden soll.

Derartige Drehverbindungen sind insbesondere in der Azimutverstelleinheit und/oder der Pitchverstelleinheit vorhanden. Zahnradanordnungen der vorbezeichneten Art sind im Betrieb Belastungen unter anderem durch den die Drehung bewirkenden Antrieb sowie durch abtriebsseitige Kräfte und Momente ausgesetzt. So erzeugen die Zähne, die sich miteinander im Eingriff befinden, neben einer Abrollbewegung stets auch eine relativ zueinander gerichtete Reibbewegung. An den mit Reibung beaufschlagten Stellen der Zahnflanken in der Zahnradanordnung entsteht Verschleiß. Um den Verschleiß zu begrenzen, werden die Zahnräder der Zahnradanordnung in der Regel daher durch Zufuhr von Schmierstoffen geschmiert. Dadurch lässt sich der Verschleiß in der Regel vermindern, jedoch nicht beseitigen.

Insbesondere bei den für Windenergieanlagen bekannten Drehverbindungen, insbesondere im Bereich des Pitchantriebs und/oder des Azimutantriebs, tritt der Verschleiß der Zahnradanordnung in der Regel nicht gleichmäßig auf. Dies erklärt sich im Bereich des Azimutantriebs insbesondere dadurch, dass der Wind meist aus einer vorherrschenden Windrichtung weht. Daher ist der Rotor einer Windenergieanlage zu einem besonders großen Zeitanteil dieser vorherrschenden Windrichtung zugewandt angeordnet. Der Rotor einer Windenergieanlage wird somit regelmäßig und zu einem besonders großen Zeitanteil lediglich in einem kleinen Winkelbereich, nämlich dem der vorherrschenden Windrichtung, verstellt. Daher befinden sich ein oder mehrere Zähne häufiger im lasttragenden Eingriff mit einem gegenüberliegenden Zahnrad als ein Großteil der übrigen Zähne des antreibenden Zahnrades. Infolgedessen ist der Verschleiß an Zähnen, die in diesem Bereich angeordnet sind, besonders groß. Die gleichen Verschleißsymptome sind ebenfalls im Bereich des Pitchantriebes zu erkennen, da auch ein Rotorblatt in der Regel einen bestimmten bevorzugten Pitchverstellbereich aufweist, in dem dieses besonders häufig eingestellt wird. Der zentrale bzw. die zentralen, sich mit dem angetriebenen Zahnrad im Eingriff befindende Zahn bzw. befindenden Zähne des Antriebszahnrades des Pitchantriebes wird bzw. werden auch als der goldene Zahn bzw. die goldenen Zähne bezeichnet.

Derartige Zahnradanordnungen haben ferner den Nachteil, dass diese schlagartig, beispielsweise durch einen Zahnbruch, versagen können. Darüber hinaus weisen derartige Zahnradverbindungen häufig recht große Baugrößen auf, da beispielsweise die zu erzielende Übersetzung mit einer Mehrzahl an Getriebestufen und großen Zahnrädern zu kleinen Zahnrädern zu realisieren ist. Ferner ist die Schockbelastung einer derartigen Zahnradverbindung eingeschränkt. Außerdem muss das Spiel der Zahnradverbindung in der Regel mit aufwendigen Maßnahmen reduziert werden, beispielsweise indem die Zahnradverbindung vorgespannt wird. Derzeit eingesetzte Zahnradverbindungen weisen eine erhöhte Ausfallwahrscheinlichkeit auf, was darin resultiert, dass die Windenergieanlage eine eingeschränkte Verfügbarkeit aufweist. Dies resultiert insbesondere darin, dass die Kosten der Windenergieanlage erhöht und/oder der zu erzielende Umsatz durch eine Energieeinspeisung reduziert ist bzw. sind. Ferner resultieren die großen Baugrößen, der in der Regel eingesetzten Stirnradverzahnungen, in weiteren hohen Kosten.

Das Deutsche Patent- und Markenamt hat in der Prioritätsanmeldung zu vorliegender Anmeldung folgenden Stand der Technik recherchiert: DE 102 26 713 A1, DE 10 2007 008 167 A1, DE 10 2007 009 575 A1, DE 10 2014 009 306 A1, US 2016 / 0 131 106 A1. Weiterer Stand der Technik ist zum Beispiel bekannt aus EP 2960495 A1 und PL 203086 B1.

Es ist daher eine Aufgabe der vorliegenden Erfindung, eine Verstelleinheit für eine Azimutverstellung und/oder für eine Pitchverstellung einer Windenergieanlage, eine Verstellvorrichtung, eine Pitchverstellvorrichtung, eine Azimutverstellvorrichtung, eine Windenergieanlage sowie Verfahren zur Rotorblattverstellung und Windrichtungsnachführung sowie die Verwendung einer Verstelleinheit und/oder einer Verstellvorrichtung bereitzustellen, welche ein oder mehrere der genannten Nachteile vermindern oder beseitigen. Insbesondere ist es eine Aufgabe der Erfindung, eine Lösung bereitzustellen, die eine geringere Ausfallwahrscheinlichkeit einer Windenergieanlage ermöglicht.

Gemäß einem ersten Aspekt der Erfindung wird diese Aufgabe gelöst durch eine Verstelleinheit für eine Azimutverstellung und/oder für eine Pitchverstellung einer Windenergieanlage, umfassend eine an einem ersten ringförmigen Flansch anordenbare Antriebseinheit mit einer Exzenterwelle, ein an einem Umfang eines zweiten ringförmigen Flansches, der drehbar zum ersten ringförmigen Flansch angeordnet ist, anordenbares erstes Eingriffselement, wobei an einer Umfangsfläche des ersten Eingriffselements eine Vielzahl an konkav und konvex ausgebildeten ersten Kurvenabschnitten angeordnet ist, ein zweites Eingriffselement, mit an einer Umfangsfläche angeordneten, zu den ersten Kurvenabschnitten korrespondierenden, konkaven und konvexen zweiten Kurvenabschnitten, und wobei die Exzenterwelle drehbar an dem zweiten Eingriffselement, insbesondere an einer exzentrischen Stelle des zweiten Eingriffselements, angeordnet ist, und wobei das erste Eingriffselement und das zweite Eingriffselement angeordnet und ausgebildet sind, Wälzbewegungen zwischen den ersten Kurvenabschnitten und den zweiten Kurvenabschnitten auszuführen.

Erfindungsgemäß umfasst die Verstelleinheit zwei oder mehr erste Eingriffselemente und zwei oder mehr zweite Eingriffselemente mit jeweils einer ringförmigen Geometrie, wobei die zwei oder mehr ersten Eingriffselemente und die zwei oder mehr zweiten Eingriffselemente jeweils stirnseitig benachbart zueinander angeordnet sind.

Die konkav und konvex ausgebildeten ersten und zweiten Kurvenabschnitte können unterschiedlichste Geometrien aufweisen. Insbesondere sind diese Kurvenabschnitte derart ausgebildet, dass das erste und das zweite Eingriffselement aneinander abwälzen können. Vorzugsweise weisen die Kurvenabschnitte ein wellenförmiges Profil auf. Alternativ oder ergänzend vorzugsweise weisen die Kurvenabschnitte ein zahnförmiges und/oder sägezahnförmiges Profil auf. In einer weiteren möglichen Ausführungsvariante weisen die Kurvenelemente ein trapezförmiges Zahnprofil auf.

Ferner ist es bevorzugt, dass die ersten Kurvenabschnitte des ersten Eingriffselements und/oder die zweiten Kurvenabschnitte des zweiten Eingriffselements eine Zykloidenverzahnung aufweisen. Insbesondere ist es bevorzugt, dass die ersten Kurvenabschnitte und/oder die zweiten Kurvenabschnitte eine Zykloidenverzahnung aufweisen, in der die einzelnen Flanken oberhalb, das heißt der Flankenspitze zugewandt, eines Wälzpunktes eine epizykloide Geometrie bzw. eine Epizykloide und unterhalb, das heißt der Flankenspitze abgewandt, des Wälzpunktes eine hypozykloide Geometrie bzw. eine Hypozykloide aufweisen. In einer weiteren bevorzugten Ausführungsvariante ist vorgesehen, dass die ersten Kurvenabschnitte und/oder die zweiten Kurvenabschnitte eine geschweifte Epizykloide und/oder eine verschlungene Hypozykloide aufweisen. Ein Vorteil einer zykloiden Verzahnung liegt darin, dass eine gute Schmierung realisiert werden kann. Ferner ist die Flankenpressung vergleichsweise niedrig, da eine Flankenpaarung aus einem konkaven Abschnitt und einem konvexen Abschnitt besteht, so dass hier ein Flächenkontakt realisiert werden kann. Darüber hinaus sind eine hohe Überlastfähigkeit von bis zu 500% des regulären Antriebsmomentes und ein ruhiger Lauf als vorteilhafte Effekte zu nennen.

Grundsätzlich ist jede Geometrie für die Kurvenabschnitte möglich, die bei einer zykloiden Bewegung des ersten Eingriffselements relativ zum zweiten Eingriffselement eine Bewegung des ersten und/oder zweiten Eingriffselements in Umfangsrichtung hervorrufen.

Durch die Exzenterwelle kann das zweite Eingriffselement bei rotatorischer Bewegung der Exzenterwelle translatorische Bewegungen in Richtungen ausführen, die vorzugsweise orthogonal zu einer Rotationsachse der Exzenterwelle ausgerichtet sind. Durch die resultierenden translatorischen Bewegungen der zweiten Kurvenabschnitte in Richtung des ersten Eingriffselements erfolgt eine Abwälzbewegung der zweiten Kurvenabschnitte an den ersten Kurvenabschnitten. Durch diese Abwälzbewegung der zweiten Kurvenabschnitte an den ersten Kurvenabschnitten kann wiederum eine rotatorische Bewegung des zweiten Eingriffselements relativ zu dem ersten Eingriffselement, vorzugsweise um die Rotationsachse, erfolgen. Dadurch kann eine Relativbewegung des ersten Flansches relativ zum zweiten Flansch erfolgen. Diese Anordnung resultiert in einer hohen Übersetzung, wobei diese durch einen einfachen und robusten Aufbau realisiert wird. Der einfache Aufbau zeichnet sich insbesondere dadurch aus, dass an dem zweiten Flansch lediglich das erste Eingriffselement anzuordnen ist, sodass der Wartungsaufwand gering ist.

Der Erfindung liegt unter anderem die Erkenntnis zugrunde, dass derzeit eingesetzte Stirnradverbindungen eine Vielzahl an Nachteilen mit sich bringen. Insbesondere die eingeschränkte Übersetzungsgröße, der hohe Verschleiß, der Wartungsaufwand und die Zahnbruchgefahr resultieren in einer Vielzahl an technischen und wirtschaftlichen Nachteilen. Durch die erfindungsgemäße Verstelleinheit im Bereich der Azimutverstellung und/oder im Bereich der Pitchverstellung kann eine optimierte Windnachführung und/oder eine optimierte Blattverstellung realisiert werden. Durch die erfindungsgemäßen Kurvenelemente erfolgt eine Lastverteilung auf viele gleichzeitig im Eingriff befindliche Kurvenabschnitte, sodass sich im Wesentlichen kein schwerpunktmäßig belasteter Zahn ausbildet. Ferner resultiert die Anordnung in einer deutlich erhöhten Schockbelastbarkeit, die beispielsweise um bis zu 500% höher sein kann. Darüber hinaus kann auf eine aufwendige Vorspannung verzichtet werden. Es resultiert eine spielarme und/oder steife Anordnung.

In einer bevorzugten Ausführungsvariante der Verstelleinheit ist vorgesehen, dass die Verstelleinheit als Pitchverstelleinheit ausgebildet ist, und der erste Flansch als Nabenflansch und der zweite Flansch als Rotorblattflansch ausgebildet ist, oder der erste Flansch als Rotorblattflansch und der zweite Flansch als Nabenflansch ausgebildet ist, und/oder die Verstelleinheit als Azimutverstelleinheit ausgebildet ist, und der erste Flansch als Maschinenhausflansch und der zweite Flansch als Turmflansch ausgebildet ist, oder der erste Flansch als Turmflansch und der zweite Flansch als Maschinenhausflansch ausgebildet ist.

Ferner vorzugsweise sind die zweiten Kurvenabschnitte an einer Außenumfangsfläche des zweiten Eingriffselements und die ersten Kurvenabschnitte an einer Innenumfangsfläche des ersten Eingriffselements angeordnet, und die Anzahl an konvexen ersten Kurvenabschnitten des ersten Eingriffselements die Anzahl an konkaven zweiten Kurvenabschnitten des zweiten Eingriffselements um mindestens eins übersteigt, und/oder, dass die zweiten Kurvenabschnitte an einer Innenumfangsfläche des zweiten Eingriffselements und die ersten Kurvenabschnitte an einer Außenumfangsfläche des ersten Eingriffselements angeordnet sind und die Anzahl an konkaven zweiten Kurvenabschnitten des zweiten Eingriffselements die Anzahl an konvexen ersten Kurvenabschnitten des ersten Eingriffselements um mindestens eins übersteigt.

In einer besonders bevorzugten Ausführungsvariante ist vorgesehen, dass die Verstelleinheit zwei oder mehrere Antriebseinheiten umfasst. Ferner vorzugsweise umfasst die Antriebseinheit einen Motor und/oder ein Getriebe und/oder eine Bremse. Die zwei oder mehreren Antriebseinheiten, insbesondere die Motoren, sind vorzugsweise mit einem Synchronisierelement gekoppelt.

Erfindungsgemäß umfasst die Verstelleinheit zwei oder mehr erste Eingriffselemente und zwei oder mehr zweite Eingriffselemente mit jeweils einer ringförmigen Geometrie, wobei die zwei oder mehr ersten Eingriffselemente und die zwei oder mehr zweiten Eingriffselemente jeweils stirnseitig benachbart zueinander angeordnet sind. von scheiben- und/oder ringförmig ausgebildeten Eingriffselementen weisen derart angeordnete Eingriffselemente Flächenorthogonalen bzw. Durchtrittsachsen auf, die im Wesentlichen parallel ausgerichtet sind. Ferner vorzugsweise sind diese Flächenorthogonalen bzw. Durchtrittsachsen im Wesentlichen parallel zu einer Turmachse im Falle einer als Azimutverstelleinheit ausgebildeten Verstelleinheit und/oder parallel zu einer Rotorblatt-Längsachse im Falle einer als Pitchverstelleinheit ausgebildeten Verstelleinheit ausgerichtet.

Es ist ferner bevorzugt, dass das erste Eingriffselement und/oder die ersten Kurvenabschnitte und/oder das zweite Eingriffselement und/oder die zweiten Kurvenabschnitte ein trockenlauffähiges Material umfassen oder aus diesem bestehen, wobei das trockenlauffähige Material vorzugsweise ein Faserepoxidharzverbundmaterial ist. Durch ein derartiges trockenlauffähiges Material ist eine zusätzliche Schmierung mit Fett und/oder Öl nicht oder lediglich in verminderten Maßen notwendig. Somit resultiert ein trockenlauffähiges Material an einem, zwei oder mehreren der zuvor genannten Elementen in einer wartungsfreieren Verstelleinheit. Das erste Eingriffselement und das zweite Eingriffselement weist vorzugsweise parallel angeordnete Durchtrittsachsen auf, wobei diese

Durchtrittsachsen ferner vorzugsweise parallel zu einer Rotationsachse der Exzenterwelle ausgerichtet sind. Darüber hinaus ist es bevorzugt, dass das erste Eingriffselement einen Innendurchmesser aufweist, der größer ist als ein Außendurchmesser des zweiten Eingriffselements, und/oder das erste Eingriffselement einen Außendurchmesser aufweist, der kleiner ist als ein Innendurchmesser des zweiten Eingriffselements.

Eine weitere besonders bevorzugte Ausführungsvariante der Verstelleinheit sieht vor, dass das erste Eingriffselement als Bolzenring und die ersten Kurvenabschnitte als Bolzen ausgebildet sind, wobei die Bolzen vorzugsweise in Umfangsrichtung äquidistant voneinander beabstandet sind und ferner vorzugsweise eine Bolzenlängsachse aufweisen, und derart angeordnet sind, dass die Bolzenlängsachsen im Wesentlichen parallel zu der Rotationsachse ausgerichtet sind. Ferner ist es bevorzugt, dass die ersten Kurvenabschnitte durch kugelförmige und/oder teilkugelförmige Körper ausgebildet sind. Insbesondere ist es bevorzugt, dass die kugelförmigen und/oder teilkugelförmigen Körper in Umfangsrichtung äquidistant beabstandet sind. Ferner kann es bevorzugt sein, dass ein, zwei, mehrere oder alle der Bolzen durch kugelförmige und/oder teilkugelförmige Körper ersetzt werden, um die ersten Kurvenabschnitte auszubilden.

In einer bevorzugten Ausführungsvariante ist ferner vorgesehen, dass die Bolzen und/oder die kugelförmigen Körper und/oder teilkugelförmigen Körper drehbar gelagert sind. Insbesondere ist es bevorzugt, dass diese um eine Achse parallel zur Exzenterwelle drehbar gelagert sind. Eine weitere bevorzugte Fortbildung der Verstelleinheit zeichnet sich dadurch aus, dass die Bolzen und/oder die kugelförmigen Körper und/oder teilkugelförmigen Körper kardanisch aufgehängt sind.

Eine bevorzugte Ausführungsvariante sieht vor, dass die Verstelleinheit für eine Azimutverstellung und/oder für eine Pitchverstellung einer Windenergieanlage, eine an einem ersten ringförmigen Flansch anordenbare Antriebseinheit mit einer Exzenterwelle, die eine Rotationsachse aufweist, einen an einem Umfang eines zweiten ringförmigen Flansches, der drehbar zum ersten ringförmigen Flansch angeordnet ist, anordenbaren Bolzenring, eine an einer Umfangsfläche des Bolzenrings angeordnete Vielzahl äquidistant positionierter Bolzen, wobei die Bolzen zumindest abschnittsweise einen konvexen, insbesondere einen runden, Querschnitt orthogonal zu einer Bolzenlängsachse aufweisen und diese Bolzenlängsachse im Wesentlichen parallel zu der Rotationsachse ausgerichtet ist, ein Kurvenelement, mit an einer radialen Umfangsfläche angeordneten, zu den Bolzen korrespondierenden, im Wesentlichen konkaven, Kurvenabschnitten, und wobei das Kurvenelement derart angeordnet ist, dass eine Ebenenorthogonale im Wesentlichen parallel zu der Rotationsachse ausgerichtet ist, umfasst, wobei die Exzenterwelle drehbar an dem Kurvenelement, insbesondere an einer exzentrischen Stelle des Kurvenelements, angeordnet ist, und wobei das Kurvenelement angeordnet und ausgebildet ist, eine Wälzbewegung mit den konkaven Kurvenabschnitten an den Bolzen auszuführen.

Die Antriebseinheit kann vorzugsweise einen elektrischen und/oder hydraulischen Motor umfassen. Ferner ist es bevorzugt, dass die Antriebseinheit zwei oder mehrere elektrische und/oder hydraulische Motoren umfasst. Die Antriebseinheit weist vorzugsweise eine rotatorisch bewegbare Abtriebswelle auf. Diese Abtriebswelle ist vorzugsweise in einem Bereich, der an das der Antriebseinheit abgewandte Ende der Abtriebswelle angrenzt, als Exzenterwelle ausgebildet oder umfasst diese. Dieses Ende der Exzenterwelle kann beispielsweise als Zapfen ausgebildet sein, wobei die Mittelachse dieses Zapfens außerhalb der Rotationsachse der Exzenterwelle angeordnet ist und somit nicht koaxial angeordnet ist. Alternativ vorzugsweise kann die Exzenterwelle eine koaxial zur Rotationsachse angeordnete Welle aufweisen, wobei an dem der Antriebseinheit abgewandten Ende der Welle beispielsweise eine exzentrisch angeordnete Scheibe vorgesehen ist, wobei diese Scheibe ferner vorzugsweise drehbar, beispielsweise mittels eines Wälzlagers, an dem Kurvenelement gelagert ist. Grundsätzlich kann die Exzenterwelle jegliche Form einer rotatorisch antreibbaren Welle mit einem exzentrisch angeordneten Element und/oder einer exzentrischen Ausbildung annehmen.

Bei dem Einsatz der Verstelleinheit als Azimutverstelleinheit ist die Rotationsachse der Exzenterwelle vorzugsweise im Wesentlichen parallel zur Längsachse eines Windenergieanlagen-Turms angeordnet. Bei dem Einsatz der Verstelleinheit als Pitchverstelleinheit ist die Rotationsachse der Exzenterwelle vorzugsweise im Wesentlichen parallel zur Längsachse eines Windenergieanlagen-Rotorblattes angeordnet.

In einer bevorzugten Ausführungsvariante ist die Vielzahl an äquidistant positionierten Bolzen an einer Innenumfangsfläche des Bolzenrings angeordnet. In einer weiteren bevorzugten Ausführungsvariante ist die Vielzahl an äquidistant positionierten Bolzen an einer Außenumfangsfläche des Bolzenrings angeordnet. Ferner ist es bevorzugt, dass die konkaven Kurvenabschnitte des Kurvenelements an einer radialen Außenumfangsfläche des Kurvenelements angeordnet sind. Darüber hinaus ist es bevorzugt, dass die konkaven Kurvenabschnitte des Kurvenelements an einer radialen Innenumfangsfläche des Kurvenelements angeordnet sind. Insbesondere ist es bevorzugt, dass die Vielzahl an äquidistant positionierten Bolzen an einer Innenumfangsfläche des Bolzenrings angeordnet ist und die konkaven Kurvenabschnitte des Kurvenelements an einer radialen Außenumfangsfläche des Kurvenelements angeordnet sind. Alternativ oder zusätzlich ist es bevorzugt, dass die Vielzahl an äquidistant positionierten Bolzen an einer Außenumfangsfläche des Bolzenrings angeordnet ist und die konkaven Kurvenabschnitte des Kurvenelements an einer radialen Innenumfangsfläche des Kurvenelements angeordnet sind

Der Bolzenring weist vorzugsweise einen Außendurchmesser auf, der auf einen Umfang des Flansches, an dem der Bolzenring angeordnet ist, angepasst ist. Beispielsweise kann der Bolzenring einen Außendurchmesser aufweisen, der im Wesentlichen die gleichen Abmessungen aufweist wie ein Innendurchmesser des Flansches, an dem der Bolzenring angeordnet ist. Ferner vorzugsweise weist der Bolzenring einen Innendurchmesser auf, der kleiner 100 %, und/oder kleiner 90%, und/oder kleiner 80%, und/oder kleiner 70%, und/oder kleiner 60%, und/oder kleiner 50% des Außendurchmessers des Flansches, an dem der Bolzenring angeordnet ist, beträgt. Ferner vorzugsweise weist der Bolzenring einen Innendurchmesser auf, der kleiner 100 %, und/oder kleiner 90%, und/oder kleiner 80%, und/oder kleiner 70%, und/oder kleiner 60%, und/oder kleiner 50% des Innendurchmessers des Flansches, an dem der Bolzenring angeordnet ist, beträgt.

Der Bolzenring kann entweder als separates Bauteil an einer Windenergieanlage vorgesehen werden oder integral als Teil eines weiteren Bauteils, beispielsweise eines Flansches oder eines Lagers, ausgebildet sein. Der Bolzenring ist insbesondere derart ausgebildet, dass an einer, vorzugsweise radialen, Innen- und/oder Außenumfangsfläche die Vielzahl äquidistant positionierter Bolzen angeordnet und/oder befestigt werden kann. Beispielsweise kann der Bolzenring an seiner Innen- und/oder Außenumfangsfläche äquidistant beabstandete Ausnehmungen, beispielsweise in Form von Mulden und/oder Kerben, aufweisen, in denen die Bolzen angeordnet werden können. Ferner besteht die Möglichkeit einer separaten Befestigung der Bolzen an dem Bolzenring, beispielsweise mit einer kraft-, form- und/oder stoffschlüssigen Verbindung. Ferner können die Bolzen integral mit dem Bolzenring verbunden sein, wobei es insbesondere bevorzugt ist, dass der die Bolzen integral umfassende Bolzenring als Gussteil hergestellt ist oder aus dem Vollen spanend, insbesondere durch Fräsen, hergestellt ist. Alternativ oder zusätzlich können die Bolzen auch mit weiteren Elementen angeordnet sein. Die äquidistante Anordnung der Bolzen bezieht sich insbesondere auf eine äquidistante Beabstandung der Bolzen in Umfangsrichtung des Bolzenrings.

Die Bolzen weisen vorzugsweise eine Längserstreckung auf, die ferner vorzugsweise im Wesentlichen parallel zur Rotationsachse der Exzenterwelle ausgerichtet ist. Ferner vorzugsweise weisen die Bolzen einen Querschnitt in orthogonaler Richtung zur Längserstreckung auf. Der Querschnitt kann beispielsweise eine kreisrunde und/oder ovale Geometrie aufweisen. Darüber hinaus kann der Querschnitt auch halbkreisförmig oder halbelliptischförmig ausgebildet sein. Bei einem halbkreisförmigen oder halbelliptischförmigen Querschnitt ist es bevorzugt, dass der runde Abschnitt des Bolzens dem Mittelpunkt des Bolzenrings zugewandt ist. Ferner ist es bevorzugt, dass der gerade Abschnitt des halbkreisförmigen oder halbelliptischförmigen Bolzens im Wesentlichen parallel zur tangentialen Richtung des Bolzenrings angeordnet ist. In einer weiteren bevorzugten Fortbildung können die Bolzen einen eckigen, beispielsweise einen dreieckigen und/oder viereckigen, Querschnitt aufweisen. Ferner ist es bevorzugt, dass die Bolzen, insbesondere ein durch die ringförmig angeordneten Bolzen gebildeter Innen- und/oder Außenumfang, zumindest abschnittsweise, eine Negativgeometrie der Kurvenabschnitte des Kurvenelements aufweisen. Die Bolzen können als separate Elemente an dem Bolzenring bzw. an dem integral mit dem Bolzenring ausgebildeten Bauteil angeordnet sein. Alternativ können die Bolzen auch integral mit dem Bolzenring bzw. dem integral mit dem Bolzenring ausgebildeten Bauteil verbunden sein

Das Kurvenelement kann beispielsweise als Kurvenscheibe ausgebildet sein. Vorzugsweise weist das als Kurvenscheibe ausgebildete Kurvenelement Öffnungen und/oder Aussparungen auf, die insbesondere derart ausgebildet sind, dass über diese Querkräfte übertragbar sind. Insbesondere sind die Öffnungen und/oder Aussparungen derart ausgebildet, dass die in diesen Öffnungen und/oder Aussparungen angeordneten Exzenterwellen Querkräfte auf das Kurvenelement, insbesondere auf die Kurvenscheibe, übertragen können. Ferner ist es bevorzugt, dass das Kurvenelement eine ringförmige Geometrie aufweist. Vorzugsweise weist das Kurvenelement an einer radialen Außen- und/oder Innenumfangsfläche im Wesentlichen konkave Kurvenabschnitte auf, die zu den Bolzen korrespondieren. Die korrespondierende Ausbildung der Kurvenabschnitte zu den Bolzen ist vorzugsweise derart gestaltet, dass die Kurvenabschnitte eine Wälzbewegung an den Bolzen ausführen können und die Wälzbewegung somit in einer auf das Kurvenelement in tangentialer Richtung wirkenden Kraft resultiert. Die konkaven Kurvenabschnitte können beispielsweise durch Ausnehmungen an dem Kurvenelement ausgebildet sein. Durch die konkaven Kurvenabschnitte können ferner auch konvexe Abschnitte ausgebildet werden. Die konkaven und konvexen Kurvenabschnitte sind ferner vorzugsweise homogen über den Außen- und/oder Innenumfang des Kurvenelements verteilt angeordnet. Um eine verbesserte Wälzbewegung zu ermöglichen, sind diese konvexen Abschnitte des Kurvenelements vorzugsweise als konvexe Kurvenabschnitte ausgebildet. Die konvexen Abschnitte können vollständig oder abschnittsweise eine Negativgeometrie des Zwischenraums zweier benachbarter Bolzen aufweisen. Ferner können auch die konvexen Abschnitte vollständig oder abschnittsweise eine den Bolzen entsprechende Geometrie aufweisen.

Das Kurvenelement weist vorzugsweise unter Berücksichtigung der konvexen Kurvenabschnitte einen Außen- oder Innendurchmesser auf, der die gleiche Abmessung aufweist, wie der Innen- oder Außendurchmesser des Bolzenrings unter Berücksichtigung der Bolzen. Der Bolzenring kann ferner auch einen Innen- und/oder Außendurchmesser aufweisen, der ein größeres Abmaß aufweist als der Außen- und/oder Innendurchmesser des Kurvenelements unter Berücksichtigung der konvexen Kurvenabschnitte. Ferner vorzugsweise weist das Kurvenelement einen Außendurchmesser auf, der gleich dem Abmaß der größten Entfernung zwischen zwei Bolzen entspricht. Ferner vorzugsweise weist das Kurvenelement einen Außendurchmesser auf, der kleiner 100 %, und/oder kleiner 90%, und/oder kleiner 80%, und/oder kleiner 70%, und/oder kleiner 60%, und/oder kleiner 50% des Innendurchmessers des Bolzenrings ist. Ferner vorzugsweise weist das Kurvenelement einen Außendurchmesser auf, der kleiner ist als die größte Abmessung zwischen dem Tiefpunkt zwischen zwei Bolzen zu einem gegenüberliegend angeordneten Bolzen. Ferner vorzugsweise weist das Kurvenelement einen Innendurchmesser auf, der gleich dem Abmaß der größten Entfernung zwischen zwei Bolzen entspricht. Ferner vorzugsweise weist das Kurvenelement einen Innendurchmesser auf, der größer 100 %, und/oder größer 110%, und/oder größer 120%, und/oder größer 130%, und/oder größer 140%, und/oder größer 150% des Außendurchmessers des Bolzenrings ist.

Durch die Exzenterwelle kann das Kurvenelement bei rotatorischer Bewegung der Exzenterwelle translatorische Bewegungen in Richtungen ausführen, die orthogonal zur Rotationsachse der Exzenterwelle ausgerichtet sind. Durch diese translatorischen Bewegungen der konkaven Kurvenabschnitte in Richtung des Bolzenrings erfolgt eine Abwälzbewegung der Kurvenabschnitte an den Bolzen. Durch diese Abwälzbewegung der konkaven Kurvenabschnitte an den Bolzen kann wiederum eine rotatorische Bewegung des Kurvenelements relativ zu dem Bolzenring um die Rotationsachse erfolgen. Dadurch kann eine Relativbewegung des ersten Flansches relativ zum zweiten Flansch erfolgen. Diese Anordnung resultiert in einer sehr hohen Übersetzung, wobei diese durch einen einfachen und robusten Aufbau realisiert wird. Der einfache Aufbau zeichnet sich insbesondere dadurch aus, dass an dem zweiten Flansch lediglich der Bolzenring und die Bolzen anzuordnen sind, sodass der Wartungsaufwand äußerst gering ist.

Das Kurvenelement besteht vorzugsweise aus einem abriebfesten und/oder verschleißarmen Material oder umfasst dieses. Das Kurvenelement besteht ferner vorzugsweise aus einem metallischen Material oder umfasst dieses. Insbesondere ist es bevorzugt, dass dieses Material Aluminium und/oder Stahl ist. Insbesondere sind hochfeste Stähle und/oder Stahllegierungen bevorzugt. Ferner vorzugsweise kann das Kurvenelement auch aus einem Kunststoff, beispielsweise einem verstärkten, vorzugsweise faserverstärkten, Kunststoff, bestehen oder diesen umfassen.

In einer bevorzugten Ausführungsvariante der Verstelleinheit ist vorgesehen, dass die Verstelleinheit als Pitchverstelleinheit ausgebildet ist und der erste Flansch als Nabenflansch und der zweite Flansch als Rotorblattflansch ausgebildet ist, und/oder die Verstelleinheit als Azimutverstelleinheit ausgebildet ist und der erste Flansch als Maschinenhausflansch und der zweite Flansch als Turmflansch ausgebildet ist. Die Ausbildung der Verstelleinheit als Pitchverstelleinheit und/oder als Azimutverstelleinheit resultiert in dem besonderen Vorteil, dass die Verstelleinheit im Vergleich zu konventionellen Verstelleinheiten eine äußerst geringe Baugröße aufweist, woraus eine kompakte Bauweise resultiert. Daraus wiederum resultiert, dass die Nabe und/oder ein Maschinenhaus mit einer geringeren Baugröße ausgebildet werden kann bzw. können.

Gemäß einer weiteren bevorzugten Ausführungsvariante der Verstelleinheit ist vorgesehen, dass die konkaven Kurvenabschnitte an einer Außenumfangsfläche des Kurvenelements und eine Anzahl an Bolzen an einer Innenumfangsfläche des Bolzenrings angeordnet sind und die konkaven Kurvenabschnitte des Kurvenelements als eine Anzahl von Ausnehmungen ausgebildet sind und die Anzahl an Bolzen des Bolzenrings diese Anzahl um mindestens eins übersteigt, und/oder die konkaven Kurvenabschnitte an einer Innenumfangsfläche des Kurvenelements und eine Anzahl an Bolzen an einer Außenumfangsfläche des Bolzenrings angeordnet sind und die konkaven Kurvenabschnitte des Kurvenelements als eine Anzahl von Ausnehmungen ausgebildet sind und die Anzahl an Ausnehmungen die Anzahl an Bolzen des Bolzenrings um mindestens eins übersteigt. Mit der derart ausgebildeten Verstelleinheit ist sichergestellt, dass jeder Kurvenabschnitt sukzessiv an benachbart angeordneten Bolzen abwälzt, sodass die Verschleißerscheinungen weiter verringert sind.

Eine weitere bevorzugte Fortbildung der Verstelleinheit zeichnet sich dadurch aus, dass die Verstelleinheit zwei oder mehrere Antriebseinheiten umfasst. Durch die Anordnung von zwei oder mehreren Antriebseinheiten kann sichergestellt werden, dass hohe Antriebskräfte bereitgestellt werden können und somit eine sichere Lastübertragung gewährleistet werden kann. Insbesondere ist es bevorzugt, dass die zwei oder mehreren Antriebseinheiten äquidistant an einem Umfang des ersten Flansches angeordnet sind. Alternativ vorzugsweise sind die Antriebseinheiten nicht äquidistant an dem Umfang des ersten Flansches angeordnet, sondern beispielsweise in Gruppen zusammengefasst, welche wiederum äquidistant oder nicht äquidistant angeordnet sein können.

Ferner ist vorzugsweise vorgesehen, dass die Antriebseinheit einen Motor und/oder ein Getriebe und/oder eine Bremse umfasst. Insbesondere ist es bevorzugt, dass der Motor als ein elektrischer Motor und/oder hydraulischer Motor ausgebildet ist. Darüber hinaus ist es bevorzugt, dass das Getriebe ein Planetengetriebe ist. Insbesondere ist es bevorzugt, dass das Getriebe eine Übersetzung von kleiner-gleich 10, oder größer 10, ferner vorzugsweise von größer 20, insbesondere bevorzugt von größer 30 aufweist. Diese Übersetzung ist deutlich geringer als die üblicherweise vorgesehene Übersetzung, welche beispielsweise bei 200 liegt, sodass eine geringere Baugröße erzielt werden kann. Durch die Übersetzung wird die Drehzahl von der Antriebsseite zur Abtriebsseite reduziert und das Drehmoment von der Antriebsseite zur Abtriebsseite gesteigert. Infolge des gesteigerten Drehmoments ist es bevorzugt, dass die Abtriebsseite, an der insbesondere die Exzenterwelle angeordnet ist, in Folge von hohen Querkräften abgestützt ist. Dies kann beispielsweise durch eine geeignete Führung oder eine Lagerung erfolgen.

Durch die Anordnung eines Motors und eines Getriebes, wobei die Getriebeabtriebswelle vorzugsweise die Exzenterwelle ausbildet oder umfasst, kann im Bereich der Antriebseinheit eine entsprechend große Übersetzung der Motordrehzahl in eine relativ langsame Drehbewegung mit einem hohen Drehmoment umgewandelt werden. Eine Anordnung einer Bremse im Bereich der Antriebseinheit hat ferner den Vorteil, dass eine Drehbewegung, beispielsweise des Pitchantriebs und/oder des Azimutantriebs, hier abgebremst werden kann und vorzugsweise ein Stillstand erreicht wird. In diesem Zustand kann beispielsweise eine entsprechend angeordnete Feststelleinrichtung das Maschinenhaus oder ein Rotorblatt arretieren.

Es ist ferner bevorzugt, dass die zwei oder mehreren Antriebseinheiten, insbesondere die Motoren, mit einem Synchronisierelement gekoppelt sind. Insbesondere ist es bevorzugt, dass das Synchronisierelement ein maximales Übertragungsdrehmoment von größer 200 Nm, und/oder größer 250 Nm, und/oder größer 300 Nm, und/oder größer 320 Nm, und/oder größer 350 Nm aufweist. Dem Synchronisierelement liegt die Erkenntnis zugrunde, dass mehrere angeordnete Antriebseinheiten bzw. deren Motoren zumindest nach einer Vielzahl an Betriebsstunden im Wesentlichen nicht die exakt gleichen Drehwinkel aufweisen, wie beim Einbau. Es ist jedoch wünschenswert, dass die Antriebseinheiten im Wesentlichen den gleichen, vorbestimmten Drehwinkel zueinander aufweisen, um eine optimale Wälzbewegung der Kurvenabschnitte an den Bolzen und eine entsprechende Vorspannung zu realisieren bzw. zu gewährleisten. Insbesondere ist es bevorzugt, dass das Synchronisierelement als ein Riemen ausgebildet ist, wobei dieser Riemen weitestgehend schlupffrei an rotierbaren Elementen der zwei oder mehr Antriebseinheiten angeordnet ist. Insbesondere ist der Riemen an rotierbaren Elementen angeordnet, die die gleiche Drehzahl aufweisen sollen. Alternativ vorzugsweise ist das Synchronisierelement als eine Synchronisierkette ausgebildet. Ferner vorzugsweise sind die mehreren Antriebseinheiten durch eine Softwaresteuerung, vorzugsweise eine elektrische Softwaresteuerung, miteinander synchronisiert. Darüber hinaus kann eine Synchronisierung über eine Motorsteuerung erreicht werden. Ferner vorzugsweise erfolgt die Synchronisierung mittels eines Zwischengeleges, das insbesondere als Getriebestufe ohne eine Übersetzung ausgebildet ist.

Eine weitere bevorzugte Fortbildung der Verstelleinheit zeichnet sich dadurch aus, dass eine Antriebseinheit einen Motor aufweist und eine zweite Antriebseinheit mittels des Synchronisierelementes angetrieben wird.

Eine nicht beanspruchte Ausführungsvariante der Verstelleinheit sieht vor, dass diese zwei oder mehr Kurvenelemente umfasst, die vorzugsweise jeweils einen Eingriffsbereich an dem Bolzenring aufweisen, wobei die Eingriffsbereiche ferner vorzugsweise in Umfangsrichtung äquidistant voneinander beabstandet sind. Ein Eingriffsbereich eines Kurvenelements an dem Bolzenring ist insbesondere dadurch gekennzeichnet, dass hier die Kurvenabschnitte berührend mit den Bolzen in Kontakt sind. Es erschließt sich, dass der Ort der Eingriffsbereiche variabel ist. Der Mittelpunkt eines Eingriffsbereichs in Umfangsrichtung wird insbesondere durch den Kurvenabschnitt gebildet, der im Wesentlichen vollständig an einem Bolzen anliegt. Die äquidistante Beabstandung der Eingriffsbereiche bezieht sich insbesondere auf den Mittelpunkt der Eingriffsbereiche. Bei zwei angeordneten Kurvenelementen ist es besonders bevorzugt, dass die Mittelpunkte der Eingriffsbereiche gegenüberliegend angeordnet sind. Bei drei angeordneten Kurvenelementen ist es besonders bevorzugt, dass zwischen den Mittelpunkten der Eingriffsbereiche im Wesentlichen ein Abstand in Umfangsrichtung von 120 Bogengrad vorliegt. Die zwei oder mehr Kurvenelemente sind vorzugsweise in Richtung der Rotationsachse benachbart zueinander angeordnet. Im Betriebszustand einer Verstelleinheit für eine Azimutverstellung sind die Kurvenelemente beispielsweise zum Teil übereinander angeordnet.

In einer nicht beanspruchten Ausführungsvariante der Verstelleinheit ist vorgesehen, dass die Bolzen und/oder das mindestens eine Kurvenelement ein trockenlauffähiges Material umfassen oder aus diesem bestehen, wobei das trockenlauffähige Material vorzugsweise ein Faserepoxidharz-Verbundmaterial ist. Durch ein derartiges trockenlauffähiges Material der Bolzen ist eine zusätzliche Schmierung mit Fett und/oder Öl nicht oder lediglich in verminderten Maßen notwendig. Somit resultiert ein trockenlauffähiges Material an den Bolzen in einer wartungsfreieren Verstelleinheit.

Gemäß einem weiteren Aspekt der vorliegenden Erfindung wird die eingangs genannte Aufgabe gelöst durch eine Verstellvorrichtung für eine Azimutverstellung und/oder für eine Pitchverstellung einer Windenergieanlage, umfassend einen ersten ringförmigen Flansch und einen zweiten ringförmigen Flansch, die drehbar aneinander angeordnet sind, und eine Verstelleinheit gemäß einem der Ansprüche 1-7, wobei die Antriebseinheit an dem ersten ringförmigen Flansch angeordnet ist, das erste Eingriffselement, das vorzugsweise als Bolzenring ausgebildet ist, an einem Umfang des zweiten ringförmigen Flansches angeordnet ist, und das zweite Eingriffselement, das vorzugsweise als Kurvenelement ausgebildet ist, angeordnet und ausgebildet ist, bei Drehung der Exzenterwelle eine, vorzugsweise rotatorische, Relativbewegung zwischen dem ersten Flansch und dem zweiten Flansch zu bewirken. Ferner kann es bevorzugt sein, dass die Antriebseinheit an dem zweiten ringförmigen Flansch angeordnet ist und der Bolzenring an einem Umfang des ersten ringförmigen Flansches angeordnet ist.

Gemäß einem weiteren Aspekt der vorliegenden Erfindung wird die eingangs genannte Aufgabe gelöst durch eine Pitchverstellvorrichtung zur Rotorblattverstellung eines Rotorblatts eines Rotors einer Windenergieanlage, umfassend einen im Wesentlichen ringförmigen Nabenadapter mit einem ringförmigen Nabenflansch, wobei der Nabenadapter ausgebildet ist, an einer Nabe einer Windenergieanlage befestigt zu werden, oder einen Teil der Nabe bildet, einen im Wesentlichen ringförmigen Rotorblattadapter mit einem ringförmigen Rotorblattflansch, wobei der Rotorblattadapter ausgebildet ist, an einem Rotorblatt einer Windenergieanlage befestigt zu werden, oder einen Teil des Rotorblatts bildet, wobei der ringförmige Nabenflansch relativ zum ringförmigen Rotorblattflansch drehbar angeordnet ist, eine Verstelleinheit gemäß einem der Ansprüche 1-7, der Nabenadapter im Wesentlichen koaxial zum Rotorblattadapter angeordnet ist, wobei die Antriebseinheit an dem ringförmigen Nabenflansch angeordnet ist, und wobei das erste Eingriffselement, das vorzugsweise als Bolzenring ausgebildet ist, an dem ringförmigen Rotorblattflansch angeordnet ist.

Das Kurvenelement ist insbesondere derart angeordnet und ausgebildet, eine Wälzbewegung mit den konkaven Kurvenabschnitten an den Bolzen auszuführen, um bei Drehung der Exzenterwelle eine, vorzugsweise rotatorische, Relativbewegung zwischen dem Nabenflansch und dem Rotorblattflansch zu bewirken.

Vorzugsweise ist der Nabenadapter integral mit der Nabe verbunden und/oder ein Teil der Nabe. Ferner vorzugsweise ist der Nabenadapter lediglich als Nabenflansch ausgebildet, der vorzugsweise integral an der Nabe angeordnet ist. Ferner vorzugsweise ist der Rotorblattadapter integral mit dem Rotorblatt verbunden und/oder ein Teil des Rotorblatts. Ferner vorzugsweise ist der Rotorblattadapter lediglich als Rotorblattflansch ausgebildet, der vorzugsweise integral an der Nabe angeordnet ist. Die Antriebseinheit wird an dem Nabenflansch angeordnet, damit eine Zuleitung von Versorgungsmedien, beispielsweise von elektrischem Strom, vereinfacht ist. Der erste Flansch ist demzufolge hier als Nabenflansch ausgebildet. Der Bolzenring ist an dem zweiten Flansch angeordnet, wobei der zweite Flansch hier als Rotorblattflansch ausgebildet ist. In einer weiteren bevorzugten Ausführungsvariante ist der erste Flansch als Rotorblattflansch und der zweite Flansch als Nabenflansch ausgebildet.

Eine bevorzugte Fortbildung der Pitchverstellvorrichtung zeichnet sich ferner dadurch aus, dass der Nabenadapter mittels eines Pitchlagers, insbesondere eines Wälzlagers, mit dem Rotorblattadapter gekoppelt ist, und wobei das erste Eingriffselement, das vorzugsweise als Bolzenring ausgebildet ist, an einer Umfangsfläche, insbesondere an einer Innen- und/oder Außenumfangsfläche, des Pitchlagers angeordnet ist. Insbesondere ist es bevorzugt, dass der Bolzenring an einer Innen- und/oder Außenumfangsfläche des Außenrings des Pitchlagers angeordnet ist. Diese Fortbildung ist ferner bevorzugt, weil das Pitchlager zusammen mit dem Bolzenring hergestellt werden kann und somit Vorteile in der Fertigung erzielt werden können. Ferner reduziert sich durch diese Anordnung die Baugröße der Pitchverstellvorrichtung.

Gemäß einem weiteren Aspekt der Erfindung wird die eingangs genannte Aufgabe gelöst durch eine Azimutverstellvorrichtung zur Windrichtungsnachführung eines Maschinenhauses einer Windenergieanlage, umfassend einen im Wesentlichen ringförmigen Maschinenhausadapter mit einem ringförmigen Maschinenhausflansch, wobei der Maschinenhausadapter ausgebildet ist, an einem Maschinenhaus einer Windenergieanlage befestigt zu werden, oder einen Teil des Maschinenhauses zu bilden, einen im Wesentlichen ringförmigen Turmadapter mit einem ringförmigen Turmflansch, wobei der Turmadapter ausgebildet ist, an einem Turm einer Windenergieanlage befestigt zu werden, oder einen Teil des Turms zu bilden, wobei der Maschinenhausflansch relativ zum Turmflansch drehbar angeordnet ist, eine Verstelleinheit gemäß einem der Ansprüche 1-7, wobei der Turmadapter im Wesentlichen koaxial zum Maschinenhausadapter angeordnet ist, wobei die Antriebseinheit an dem ringförmigen Maschinenhausflansch angeordnet ist, und wobei das erste Eingriffselement, das vorzugsweise als Bolzenring ausgebildet ist, an dem ringförmigen Turmflansch angeordnet ist. Ferner besteht ebenfalls die Möglichkeit, dass die Antriebseinheit an dem ringförmigen Turmflansch und der Bolzenring an dem ringförmigen Maschinenhausflansch angeordnet sind.

Das Kurvenelement ist insbesondere derart angeordnet und ausgebildet, eine Wälzbewegung mit den konkaven Kurvenabschnitten an den Bolzen auszuführen, um bei Drehung der Exzenterwelle eine Relativbewegung zwischen dem Maschinenhausflansch und dem Turmflansch zu bewirken.

Vorzugsweise ist der Maschinenhausadapter integral mit dem Maschinenhaus verbunden und/oder ein Teil des Maschinenhauses. Ferner vorzugsweise ist der Maschinenhausadapter lediglich als Maschinenhausflansch ausgebildet, der vorzugsweise integral an dem Maschinenhaus angeordnet ist. Ferner vorzugsweise ist der Turmadapter integral mit dem Turm verbunden und/oder ein Teil des Turmes. Ferner vorzugsweise ist der Turmadapter lediglich als Turmflansch ausgebildet, der vorzugsweise integral an dem Turm angeordnet ist.

In einer bevorzugten Ausführungsvariante der Azimutverstellvorrichtung ist vorgesehen, dass der Maschinenhausadapter mittels eines Azimutlagers, insbesondere eines Wälzlagers, mit dem Turmadapter gekoppelt ist, und wobei das erste Eingriffselement, das vorzugsweise als Bolzenring ausgebildet ist, an einer Umfangsfläche, insbesondere an einer Innen- und/oder Außenumfangsfläche, des Azimutlagers angeordnet ist.

Gemäß einem weiteren Aspekt der vorliegenden Erfindung wir die eingangs genannte Aufgabe gelöst durch eine Windenergieanlage, umfassend einen Windenergieanlagen-Turm, ein Maschinenhaus, einen Rotor mit einer Nabe und mindestens einem Rotorblatt, mit einer Verstelleinheit gemäß einem der Ansprüche 1-7, und/oder mindestens einer Verstellvorrichtung gemäß Anspruch 8, und/oder mindestens einer Pitchverstellvorrichtung gemäß Anspruch 9, und/oder einer Azimutverstellvorrichtung gemäß Anspruch 10.

Gemäß einem weiteren Aspekt der vorliegenden Erfindung wird die eingangs genannte Aufgabe gelöst durch ein Verfahren zur Rotorblattverstellung eines Rotorblatts eines Rotors einer Windenergieanlage, umfassend Bereitstellung eines Rotors mit mindestens einem Rotorblatt, wobei an dem Rotorblatt und an der Nabe eine Verstelleinheit gemäß einem der Ansprüche 1-7, Verstellvorrichtung gemäß Anspruch 8 angeordnet ist, Ansteuerung von mindestens einer Antriebseinheit, insbesondere einem Motor, um die Exzenterwelle anzutreiben und das zweite Eingriffselement, das vorzugsweise als Kurvenelement ausgebildet ist, auf einer zykloiden Bewegungsbahn zu Bewegen und damit das Rotorblatt um eine Längsachse zu drehen.

Gemäß einem weiteren Aspekt der vorliegenden Erfindung wird die eingangs genannte Aufgabe gelöst durch ein Verfahren zur Windrichtungsnachführung eines Maschinenhauses einer Windenergieanlage, umfassend Bereitstellen eines Turmes und eines Maschinenhauses, wobei an dem Turm und an dem Maschinenhaus eine Verstelleinheit gemäß einem der Ansprüche 1-7, und/oder eine Verstellvorrichtung gemäß Anspruch 8 angeordnet ist, Ansteuerung von mindestens einer Antriebseinheit, insbesondere einem Motor, um die Exzenterwelle anzutreiben und das zweite Eingriffselement, das vorzugsweise als Kurvenelement ausgebildet ist, auf einer zykloiden Bewegungsbahn zu bewegen und damit das Maschinenhaus um eine Längsachse zu drehen.

Gemäß einem weiteren Aspekt der vorliegenden Erfindung wird die eingangs genannte Aufgabe gelöst durch eine Verwendung einer Verstelleinheit gemäß einem der Ansprüche 1-7 und/oder einer Verstellvorrichtung gemäß Anspruch 8 als Pitchverstellvorrichtung einer Windenergieanlage oder als Azimutverstellvorrichtung einer Windenergieanlage oder zur Rotorblattverstellung eines Rotorblatts eines Rotors einer Windenergieanlage oder zur Windrichtungsnachführung eines Maschinenhauses einer Windenergieanlage.

Die erfindungsgemäßen Verfahren und ihre möglichen Fortbildungen weisen Merkmale bzw. Verfahrensschritte auf, die sie insbesondere dafür geeignet machen, für eine erfindungsgemäße Verstelleinheit und ihre Fortbildungen bzw. für eine Verstellvorrichtung und/oder eine Azimutverstellvorrichtung und/oder eine Pitchverstellvorrichtung und ihre Fortbildungen verwendet zu werden. Für weitere Vorteile, Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen der Verstelleinheit verwiesen.

Bevorzugte Ausführungsformen der Erfindung werden beispielhaft anhand der beiliegenden Figuren erläutert. Es zeigen:
- Fig. 1:: eine schematische, dreidimensionale Ansicht einer beispielhaften Ausführungsform einer Windenergieanlage;
- Fig. 2:: eine schematische, dreidimensionale Ansicht einer beispielhaften Ausführungsform einer Pitchverstellvorrichtung mit vier Antriebseinheiten;
- Fig. 3:: eine schematische, dreidimensionale geschnittene Ansicht der Pitchverstellvorrichtung aus Fig. 2;
- Fig. 4:: eine schematische, zweidimensionale Ansicht einer beispielhaften Ausführungsform einer Azimutverstellvorrichtung;
- Fig. 5:: eine schematische, dreidimensionale Detailansicht einer beispielhaften Ausführungsform einer Azimutverstellvorrichtung.
- Fig. 6:: eine schematische, zweidimensionale Schnittansicht eines im Stand der Technik bekannten Kurvenscheibengetriebes;
- Fig. 7:: eine schematische, dreidimensionale Ansicht des in Figur 6 gezeigten Kurvenscheibengetriebes;
- Fig. 8:: eine schematische, zweidimensionale Ansicht einer beispielhaften Ausführungsform eines zweiten Eingriffselementes mit Hypozykloidenverzahnung;
- Fig. 9:: eine schematische, zweidimensionale Ansicht einer beispielhaften Ausführungsform einer Verstelleinheit;
- Fig. 10:: eine schematische, zweidimensionale Ansicht einer beispielhaften Ausführungsform eines Bolzenrings und einer Kurvenscheibe;

In den Figuren sind gleiche oder im Wesentlichen funktionsgleiche bzw. -ähnliche Elemente mit den gleichen Bezugszeichen bezeichnet.

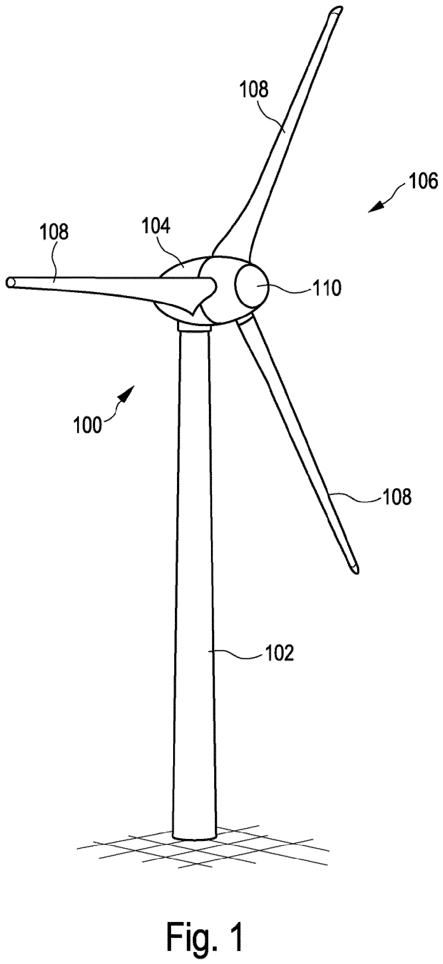

Figur 1 zeigt eine schematische, dreidimensionale Ansicht einer beispielhaften Ausführungsform einer Windenergieanlage. Figur 1 zeigt insbesondere eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator an der Gondel 104 an. Die Windenergieanlage 100 weist ferner an der Verbindungsstelle zwischen dem Turm 102 und einem Maschinenhaus in der Gondel 104 eine Verstelleinheit auf, die die Drehung der Gondel 104 mit dem Rotor 106 in einer horizontalen Ebene ohne den Einsatz eines Stirnradgetriebes ermöglicht, indem eine erfindungsgemäße Verstelleinheit vorgesehen ist. Darüber hinaus weist der Rotor 106 an der Verbindungsstelle zwischen einer Nabe und den Rotorblättern 108 jeweils eine erfindungsgemäße Verstelleinheit auf.

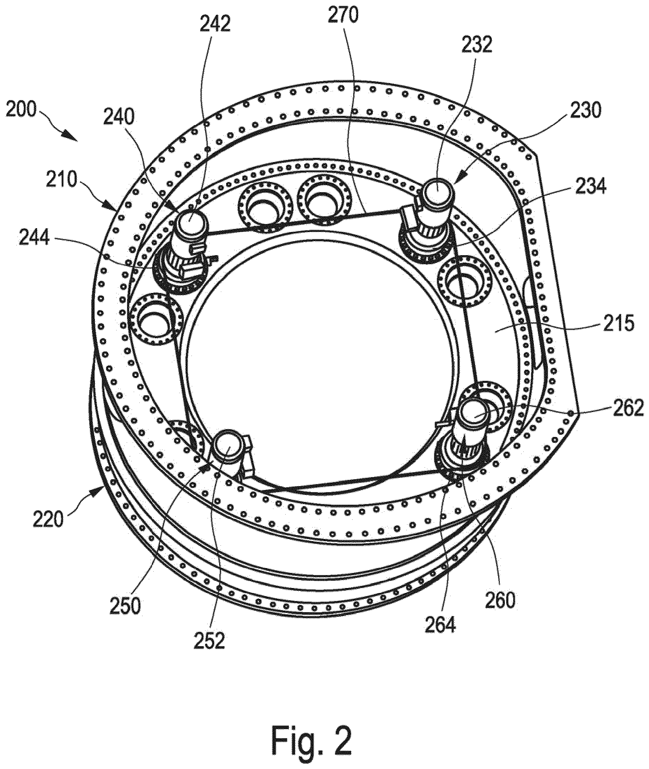

Die Figuren 2-5 betreffen insbesondere derartige Verstelleinheiten bei denen die zweiten Kurvenabschnitte an einer Außenumfangsfläche des zweiten Eingriffselements und die ersten Kurvenabschnitte an einer Innenumfangsfläche des ersten Eingriffselements angeordnet sind, mehrere Antriebseinheiten mit einem Motor und einem Getriebe angeordnet sind und bei denen zwei erste, stirnseitig benachbarte Eingriffselemente angeordnet sind. Ferner weisen die gezeigten Verstelleinheiten ringförmig ausgebildete erste und zweite Eingriffselemente auf, die parallel ausgerichtete Durchtrittsachsen aufweisen, wobei das erste Eingriffselement einen Außendurchmesser aufweist, der kleiner ist als ein Innendurchmesser des zweiten Eingriffselements. Ferner sind das erste Eingriffselement als Bolzenring und die ersten Kurvenabschnitte als Bolzen ausgebildet, wobei die Bolzen in Umfangsrichtung äquidistant voneinander beabstandet sind und ferner eine Bolzenlängsachse aufweisen und derart angeordnet sind, dass die Bolzenlängsachsen im Wesentlichen parallel zu der Rotationsachse ausgerichtet sind.

Figur 2 zeigt eine schematische, dreidimensionale Ansicht einer beispielhaften Ausführungsform einer Pitchverstellvorrichtung mit vier Antriebseinheiten. Die Pitchverstellvorrichtung 200 weist einen Nabenadapter 210 und einen Rotorblattadapter 220 auf. Der Nabenadapter 210 und der Rotorblattadapter 220 weisen jeweils eine ringförmige Geometrie mit einem kreisrunden Querschnitt auf. Darüber hinaus weisen der Nabenadapter 210 und der Rotorblattadapter 220 im Wesentlichen den gleichen Durchmesser auf. Der Rotorblattadapter 220 und der Nabenadapter 210 sind ferner aneinander koaxial angeordnet, wobei diese Anordnung zwischen den Adaptern 210, 220 drehbar gelagert gestaltet ist. Insbesondere ist zwischen den zwei Adaptern 210, 220 ein Wälzlager angeordnet. An einem Innenumfangsbereich des Nabenadapters 210, der dem Rotorblattadapter zugewandt ist, ist ein erster Flansch 215 angeordnet. Der erste Flansch 215 ist ferner ringförmig ausgebildet, wobei der Außendurchmesser des ersten Flansches 215 im Wesentlichen dem Innendurchmesser des Nabenadapters 210 entspricht. Die Beabstandung zwischen dem Außendurchmesser und dem Innendurchmesser des ersten Flansches 215 ist derart ausgebildet, dass dieser Antriebseinheiten 230, 240, 250, 260 aufnehmen kann.

Zu diesem Zweck sind ferner Durchtrittsöffnungen an dem ersten Flansch 215 vorgesehen, wobei eine Durchtrittsrichtung dieser Durchtrittsöffnungen im Wesentlichen parallel zu einer Durchtrittsachse des Nabenadapters 210 und des Rotorblattadapters 220 ausgerichtet ist. Die Antriebseinheiten 230, 240, 250, 260 umfassen jeweils einen Motor 232, 242, 252, 262 und ein Getriebe 234, 244, 264, wobei die Getriebe 234, 244, 264 hier keine obligatorischen Elemente der Verstellvorrichtung sind. Das Getriebe 234 ist innerhalb eines Getriebegehäuses 236 angeordnet. Zwischen den Motoren 232, 242, 252, 262 und den dazugehörigen Getrieben 234, 244, 264 ist jeweils eine Stelle vorgesehen, an der ein Synchronisierelement 270, das hier in Form eines Synchronisierriemens ausgebildet ist, anordenbar ist. Das Synchronisierelement 270 ist jeweils mit einem Umschlingungswinkel von 90° um jede Antriebseinheit gewickelt. Die Antriebseinheiten 230, 240, 250, 260 sind ferner äquidistant an dem ersten Flansch 215 angeordnet.

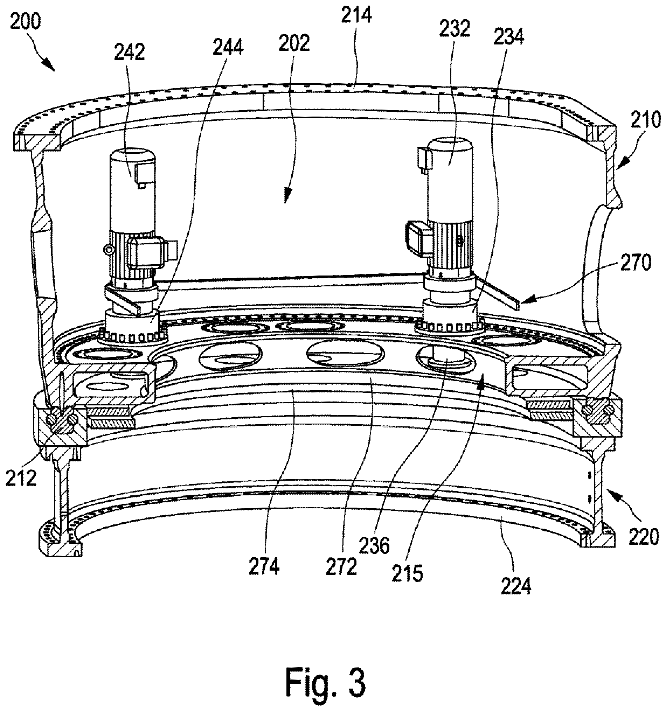

Insbesondere in Figur 3 ist die Verbindung zwischen dem Nabenadapter 210 und dem Rotorblattadapter 220 mittels eines Lagers 212 dargestellt. Darüber hinaus sind die Kurvenelemente 272, 274 an den Exzenterwellen der Antriebe angeordnet, wobei hier insbesondere eine Festlagerung mittels eines Wälzlagers bevorzugt ist. Eine nicht dargestellte Exzenterwelle ist exzentrisch an dem ersten Kurvenelement 272 angeordnet. Die Kurvenelemente 272, 274 sind vorliegend als Ringelemente ausgebildet, welche an ihrer radialen Außenumfangsfläche hier nicht dargestellte Kurvenabschnitte aufweisen, die korrespondierend zu ebenfalls nicht dargestellten Bolzen sind, welche an der Innenumfangsfläche des Lagers 212 und in Längsrichtung in Richtung der Durchtrittsachse der Adapter 210, 220 angeordnet sind. Darüber hinaus ist ein erster Verbindungsflansch 214 an dem Nabenadapter 210 an der stirnseitigen Seite angeordnet, die dem Rotorblattadapter 220 abgewandt ist. Der erste Verbindungsflansch 214 ist insbesondere angeordnet und ausgebildet, dem Nabenadapter 210 an einer Nabe eines Rotors einer Windenergieanlage zu befestigen. Alternativ vorzugsweise kann der Nabenadapter 210 auch ein integraler Bestandteil der Nabe sein. Darüber hinaus weist der Rotorblattadapter 220 einen zweiten Verbindungsflansch 224 auf, der angeordnet und ausgebildet ist, den Rotorblattadapter 220 an einem Rotorblatt zu befestigen. Alternativ vorzugsweise kann der Rotorblattadapter 220 auch integral mit einem Rotorblatt verbunden sein.

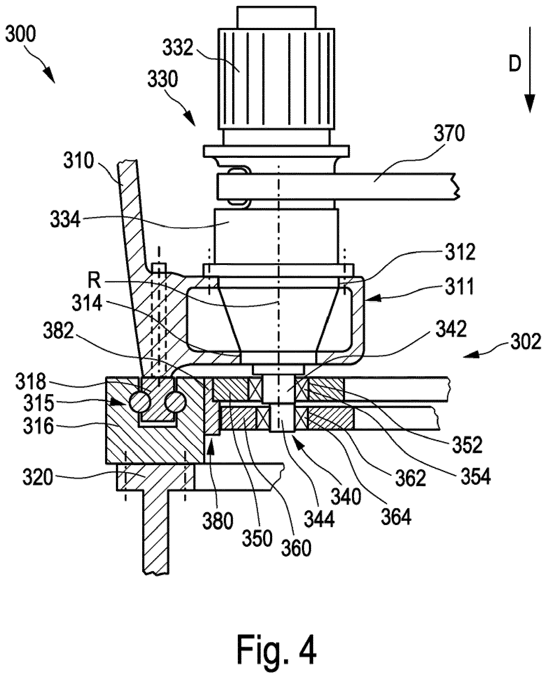

Figur 4 zeigt eine schematische, zweidimensionale Ansicht einer beispielhaften Ausführungsform einer Azimutverstellvorrichtung. Die Azimutverstellvorrichtung 300 weist einen Turmadapter 320 auf. Der Turmadapter ist als ringförmiges Element ausgebildet, welches rotationssymmetrisch um eine Durchtrittsachse D ausgebildet ist. Stirnseitig weist der Turmadapter 320 ein Lager 315 auf, welches einen Wälzlageraußenring 316 und einen in diesem mit Wälzelementen gelagerten Wälzlagerinnenring 318 aufweist. An dieser Stirnseite des Turmadapters 320 ist ferner ein ringförmiger Maschinenhausadapter 310 angeordnet. Der Maschinenhausadapter 310 ist ebenfalls als ringförmiges Element ausgebildet, das rotationssymmetrisch um die Durchtrittsachse D ausgebildet ist. Der Maschinenhausadapter 310 ist ferner koaxial zum Turmadapter 320 angeordnet. stirnseitig ist der Maschinenhausadapter 310 mit dem Wälzlagerinnenring 318 verbunden. Der Maschinenhausadapter 310 ist somit drehbar um die Durchtrittsachse D an dem Turmadapter 320 angeordnet.

Der Maschinenhausadapter 310 weist ferner einen ersten Flansch 311 auf. Der erste Flansch 311 hat eine hohlringförmige Geometrie mit einem Innendurchmesser und einem Außendurchmesser. Ferner weist der erste Flansch 311 einen Hohlraum zwischen einer Oberseite und einer Unterseite sowie zwischen dem Außendurchmesser und dem Innendurchmesser auf. Darüber hinaus weist der erste Flansch 311 Durchtrittsöffnungen auf, deren Durchtrittsrichtung parallel zur Durchtrittsrichtung D sind. Durch den Hohlraum in dem ersten Flansch 311 entsteht durch die Durchgangsöffnung eine obere Flanschöffnung 312, welche dem Turmadapter abgewandt ist, und eine untere Flanschöffnung 314, die dem Turmadapter 320 zugewandt ist. In der oberen Flanschöffnung 312 und der unteren Flanschöffnung 314 ist ein Getriebe 334, insbesondere ein Planetengetriebe, angeordnet. Die Antriebsachse dieses Getriebes 334 ist dem Turmadapter 320 abgewandt und die Abtriebswelle des Getriebes 334 ist dem Turmadapter 320 zugewandt. An dem dem Turmadapter 320 abgewandten Ende des Getriebes 334 ist ein Motor 332 angeordnet. Der Motor 332 weist eine nicht gezeigte Abtriebswelle auf, deren Rotationsache parallel zur Durchtrittsrichtung D und koaxial zur Rotationsachse R angeordnet ist. Mit dieser Abtriebswelle wird die Antriebswelle des Getriebes 334 angetrieben, sodass eine Abtriebswelle des Getriebes 334, die dem Turmadapter 320 zugewandt ist, angetrieben wird durch den Motor 332.

Die Abtriebswelle des Getriebes 334 ist als Exzenterwelle 340 ausgebildet, die einen ersten Exzenterwellenabschnitt 342, der dem Getriebe 334 zugewandt ist, und einen zweiten Exzenterwellenabschnitt 344, der dem Getriebe 334 abgewandt ist, umfasst. Die Mittelachse des ersten Exzenterwellenabschnitts 342 und des zweiten Exzenterwellenabschnitts 344 sind parallel zur Rotationsachse R angeordnet, jedoch nicht koaxial. Daher sind diese exzentrisch und bilden somit die Exzenterwelle 340. Der erste Exzenterwellenabschnitt 342 ist drehbar mittels eines ersten Exzenterwellenlagers 354 in einer ersten Kurvenelementöffnung 352 eines ersten Kurvenelements 350 gelagert. Das erste Kurvenelement 350 weist eine ringförmige Geometrie auf, wobei deren Durchtrittsachse parallel zur Durchtrittsrichtung D angeordnet ist. Das erste Kurvenelement 350 weist auf seiner radialen Außenumfangsfläche konkave Kurvenabschnitte auf, zwischen denen vorzugsweise auch konvexe Bereiche angeordnet sind. Der zweite Exzenterwellenabschnitt 344 ist analog zum ersten Kurvenelement 350 mittels eines Wälzlagers 364 in einer zweiten Kurvenelementöffnung 362 eines zweiten Kurvenelements 360 angeordnet.

Die Innenumfangsfläche des Wälzlageraußenrings 316 ist vorliegend als Bolzenring 380 ausgebildet, wobei an dem Bolzenring 380 eine Vielzahl an Bolzen 382 angeordnet sind. Die Bolzen 382 sind vorzugsweise äquidistant am Innenradius des Bolzenrings angeordnet. Insbesondere sind die Bolzen 382 und die Kurvenelemente 350, 360 angeordnet und ausgebildet, dass diese eine Wälzbewegung an den Bolzen 382 ausführen können. Die Wälzbewegung an den Bolzen 382 durch die Kurvenelemente 350, 360 erfolgt insbesondere dadurch, dass die Kurvenelemente durch die exzentrische Lagerung und die Exzenterwelle 342, 344 ständig in Richtungen orthogonal zur Rotationsachse bzw. Durchtrittsrichtung D verschoben werden. Durch das Eingreifen der Kurvenabschnitte der Kurvenelemente 350, 360 an den Bolzen 382 erfolgt eine Kraftausübung in Umfangsrichtung des Bolzenrings 380. Da der Turmadapter 320 vorzugsweise fest mit einem drehfest angeordneten Turm verbunden ist, dreht sich infolge einer Bewegung der Exzenterwellenabschnitte 342, 344 um die Rotationsachse R, der Maschinenhausadapter 310 relativ zum Turmadapter 320.

Die Antriebseinheit 330, umfassend den Motor 332 und das Getriebe 334, weist ferner ein Synchronisierelement 370 auf, welches als Synchronisierriemen ausgebildet ist. Der Synchronisierriemen 370 verbindet einen Bereich angeordnet zwischen dem Motor 332 und dem Getriebe 334 mit eben solchen Bereichen von weiteren Antriebseinheiten, sodass die Drehbewegungen der zwei oder mehr Antriebseinheiten einer Azimutverstellvorrichtung 300 synchronisiert sind. Der in Figur 4 gezeigte grundsätzliche Aufbau einer Azimutverstellvorrichtung 300 entspricht mit den notwendigen Anpassungen auch dem einer Pitchverstellvorrichtung.

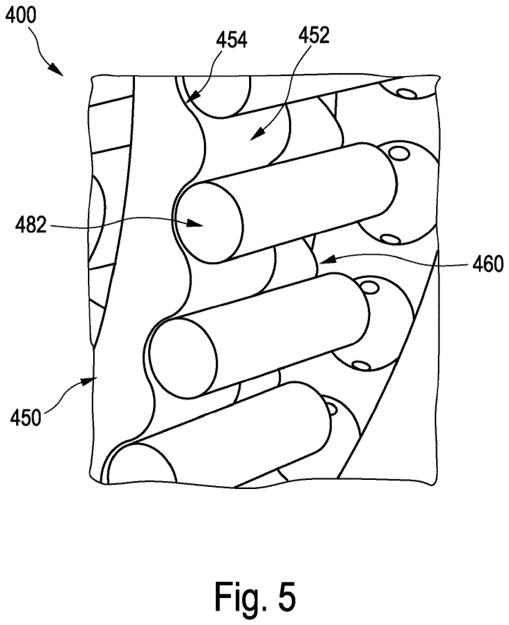

Figur 5 zeigt eine schematische, dreidimensionale Detailansicht einer beispielhaften Ausführungsform einer Azimutverstellvorrichtung. Figur 5 zeigt insbesondere eine Azimutverstellvorrichtung 400 mit einem ersten Kurvenelement 450 und einem zweiten Kurvenelement 460. Insbesondere sind ferner die Bolzen 482 dargestellt. Insbesondere zeigt die Figur 5 eine mögliche Geometrie eines Kurvenelements 450, insbesondere einer radialen Außenumfangsfläche 452 eines Kurvenelements 450 mit im Wesentlichen konkaven Kurvenabschnitten 454. Durch die konkaven Kurvenabschnitte 454 und die kreisrunde Ausbildung der Bolzen 482 wird der Mechanismus der Azimutverstellvorrichtung 400 deutlich. Durch eine Bewegung des ersten Kurvenelements 450 orthogonal zu einer Längsrichtung der Bolzen 482 erfolgt eine Wälzbewegung durch Kräfte. Diese Kräfte werden wiederum unter anderem in Umfangsrichtung erzeugt, indem das Kurvenelement 450 in orthogonaler Richtung zur Durchtrittsrichtung und zur Umfangsrichtung an die Bolzen herangeführt wird. Dieses Heranführen wiederum erfolgt durch die exzentrische Lagerung der Exzenterwelle, welche durch den Antrieb des Motors dafür sorgt, dass die Wälzbewegung erfolgt.

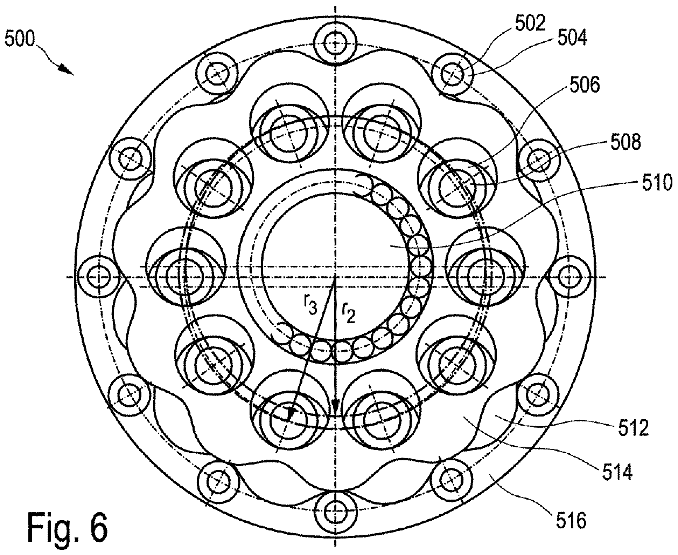

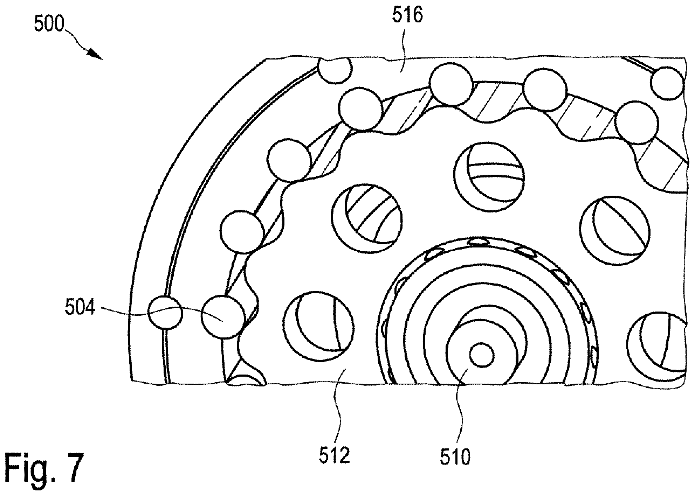

Figur 6 und Figur 7 zeigen schematische Schnittansichten eines im Stand der Technik bekannten Kurvenscheibengetriebes 500, das ein erstes Eingriffselement 512 und ein zweites Eingriffselement 514 aufweist. Das erste Eingriffselement 512 weist einen Bolzenring 516 und zwölf Bolzen 504 auf. Die Bolzen 504 sind drehbar um ihre Rotationsachse mittels eines Nadellagers 502 gelagert. Die Abtriebswellen 506 sind innerhalb von Durchtrittsöffnungen des zweiten Eingriffselementes 514 gelagert, wobei die Abtriebswellen 506 im Bereich des zweiten Eingriffselementes 514 als Kurvenrolle mit einem Lager 508 ausgebildet sind. Der Antrieb des zweiten Eingriffselementes 514 erfolgt über eine Exzenterwelle 510, die im Mittelpunkt des zweiten Eingriffselementes 514 mittels eines Wälzlagers gelagert ist.

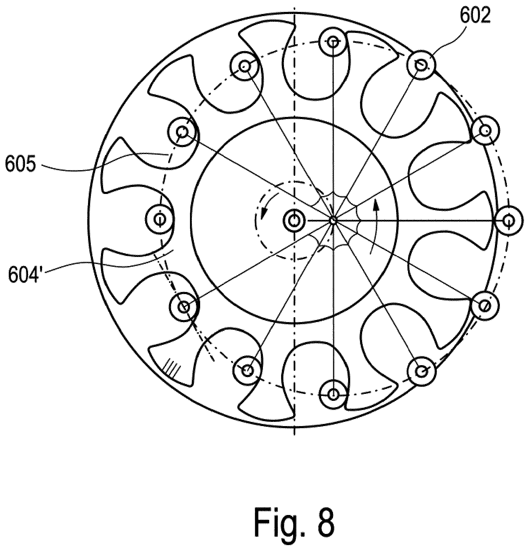

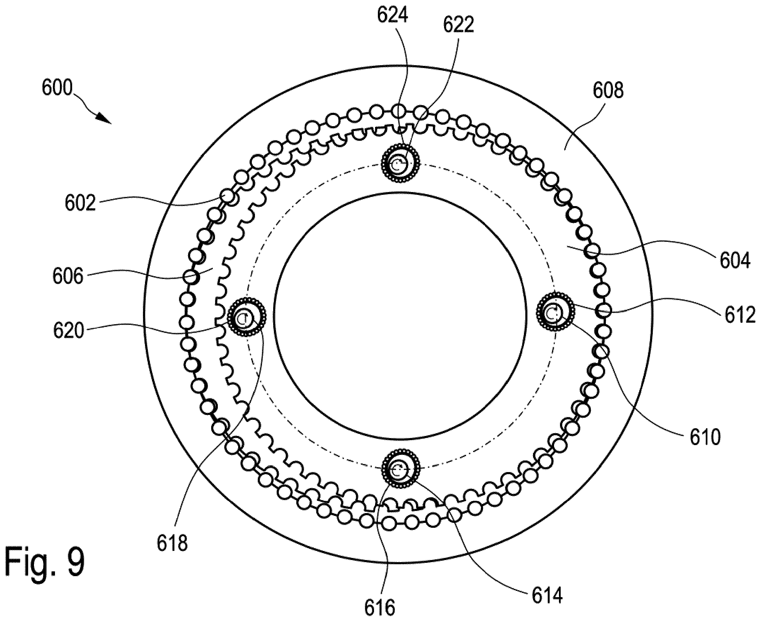

Figur 8 zeigt eine schematische, zweidimensionale Ansicht einer beispielhaften Ausführungsform eines zweiten Eingriffselementes 604' mit verschlungener Hypozykloidenverzahnung. Durch das Abwälzen des zweiten Eingriffselements 604' an den Bolzen 602 entsteht eine Abwälzbewegung mit einer verschlungenen Hypozykloidenform. Ein derartiges zweites Eingriffselement 604' könnte beispielsweise auch in einer Verstelleinheit 600 gemäß Figur 9 eingesetzt werden. Figur 9 zeigt eine schematische, zweidimensionale Ansicht einer beispielhaften Ausführungsform einer Verstelleinheit 600 mit einem ersten Eingriffselement, das einen Bolzenring 608 und Bolzen 602 aufweist, sowie zwei zweiten Eingriffselementen 604, 606, die eine ringförmige Geometrie aufweisen. Die zweiten Eingriffselemente 604, 606 weisen jeweils Kurvenabschnitte am Außenumfang auf. Ferner weisen die Eingriffselemente 604, 606 jeweils vier Durchgangsöffnungen auf, in denen jeweils mittels eines Lagers 612, 616, 620, 624 eine Exzenterwelle 610, 614, 618, 622 drehbar gelagert ist.

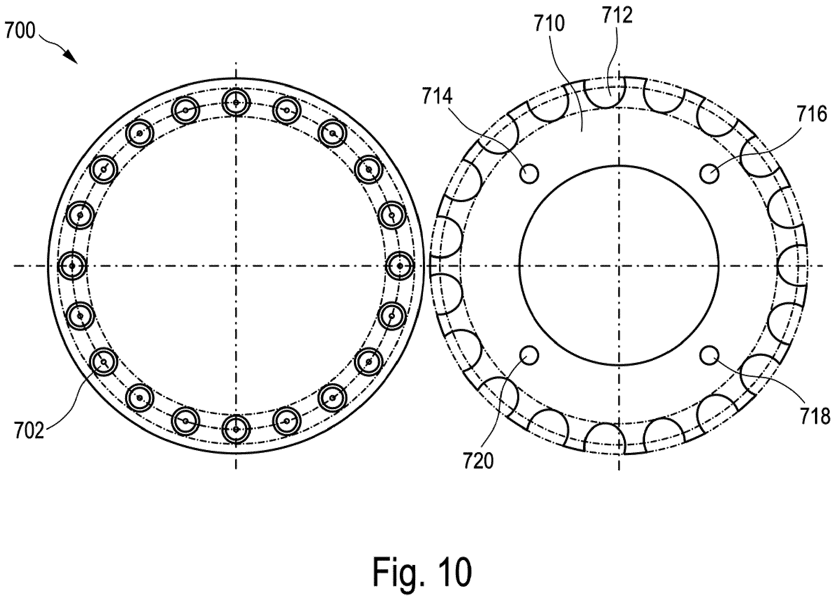

Figur 10 zeigt eine schematische, zweidimensionale Ansicht einer weiteren beispielhaften Ausführungsform eines Bolzenrings 700 und einer Kurvenscheibe 710, wobei der Bolzenring eine Mehrzahl drehbar gelagerter Bolzen 702 aufweist. Die Kurvenscheibe 710 weist am Außenumfang eine Mehrzahl an Ausnehmungen 712 auf. Ferner weist die Kurvenscheibe 710 eine erste, eine zweite, eine dritte und eine vierte Exzenterwellenöffnung 714, 716, 718, 720 auf, in denen jeweils eine Exzenterwelle drehbar gelagert werden kann.

Durch die erfindungsgemäße Verstelleinheit, insbesondere für eine Azimutverstellung und/oder eine Pitchverstellung kann durch die Anordnung von Kurvenelementen und korrespondierenden Bolzen eine besonders verschleißfreie Übersetzung in großen Bauteilen erfolgen. Insbesondere resultiert diese Anordnung in einer äußerst verschleißfreien Anordnung und darüber hinaus weist dieses System eine hohe Sicherheit auf, da der Bruch einer Erhöhung zwischen zwei Kurvenabschnitten nicht zu einem Versagen des Systems führt.

### BEZUGSZEICHEN

- 100: Windenergieanlage
- 102: Turm
- 104: Gondel
- 106: Rotor
- 108: Rotorblätter
- 110: Spinner
- 200: Pitchverstellvorrichtung
- 202, 302: Verstelleinheit
- 210: Nabenadapter
- 212: Lager
- 214: erster Verbindungsflansch
- 215, 311: erster Flansch
- 220: Rotorblattadapter
- 224: zweiter Verbindungsflansch
- 230: erste Antriebseinheit
- 232: erster Motor
- 234: erstes Getriebe
- 236: Getriebegehäuse
- 240: zweite Antriebseinheit
- 242: zweiter Motor
- 244: zweites Getriebe
- 250: dritte Antriebseinheit
- 252: dritter Motor
- 260: vierte Antriebseinheit
- 262: vierter Motor
- 264: viertes Getriebe
- 270, 370: Synchronisierelement
- 272, 350, 450: erstes Kurvenelement
- 274, 360, 460: zweites Kurvenelement
- 300,400: Azimutverstellvorrichtung
- 310: Maschinenhausadapter
- 312: obere Flanschöffnung
- 314: untere Flanschöffnung
- 315: Wälzlager
- 316: Wälzlageraußenring
- 318: Wälzlagerinnenring
- 320: Turmadapter
- 330: Antriebseinheit
- 332: Motor
- 334: Getriebe
- 340: Exzenterwelle
- 342: erster Exzenterwellenabschnitt
- 344: zweiter Exzenterwellenabschnitt
- 352: erste Kurvenelementöffnung
- 354: erstes Exzenterwellenlager
- 362: zweite Kurvenelementöffnung
- 364: zweites Exzenterwellenlager
- 380: Bolzenring
- 382, 482: Bolzen
- 452: radiale Außenumfangsfläche
- 454: konkaver Kurvenabschnitt
- 500: Kurvenscheibengetriebe
- 502: Nadellager
- 504: Bolzen
- 506: Abtriebswelle
- 508: Lager
- 510: Exzenterwelle
- 512: erstes Eingriffselement
- 514: zweites Eingriffselement
- 516: Bolzenring
- 600: Verstelleinheit
- 602: Bolzen
- 604, 604': zweites Eingriffselement
- 605: Hypozykloidenausnehmung
- 606: zweites Eingriffselement
- 608: Bolzenring
- 610: Exzenterwelle
- 612: Lager
- 614: Exzenterwelle
- 616: Lager
- 618: Exzenterwelle
- 620: Lager
- 622: Exzenterwelle
- 624: Lager
- 700: Bolzenring
- 702: Bolzen
- 710: Kurvenscheibe
- 712: Ausnehmung
- 714: erste Exzenterwellenöffnung
- 716: zweite Exzenterwellenöffnung
- 718: dritte Exzenterwellenöffnung
- 720: vierte Exzenterwellenöffnung
- D: Durchtrittsrichtung
- R: Rotationsachse

## Patentansprüche

1. Verstelleinheit (202, 302) für eine Azimutverstellung und/oder für eine Pitchverstellung einer Windenergieanlage (100), umfassend
- eine an einem ersten ringförmigen Flansch (215, 311) anordenbare Antriebseinheit (230, 240, 250, 260, 330) mit einer Exzenterwelle (340),
- ein an einem Umfang eines zweiten ringförmigen Flansches, der drehbar zum ersten ringförmigen Flansch angeordnet ist, anordenbares erstes Eingriffselement (380),
- wobei an einer Umfangsfläche des ersten Eingriffselements eine Vielzahl an konkav und konvex ausgebildeten ersten Kurvenabschnitten (382, 482) angeordnet ist,
- ein zweites Eingriffselement (272, 274, 350, 360, 450, 460), mit
o an einer Umfangsfläche (452) angeordneten, zu den ersten Kurvenabschnitten korrespondierenden, konkaven und konvexen zweiten Kurvenabschnitten (454), und
- wobei die Exzenterwelle drehbar an dem zweiten Eingriffselement, insbesondere an einer exzentrischen Stelle des zweiten Eingriffselements, angeordnet ist, und
- wobei das erste Eingriffselement und das zweite Eingriffselement angeordnet und ausgebildet sind, Wälzbewegungen zwischen den ersten Kurvenabschnitten und den zweiten Kurvenabschnitten auszuführen,
**dadurch gekennzeichnet, dass** die Verstelleinheit umfasst:
- zwei oder mehr erste Eingriffselemente (380) und zwei oder mehr zweite Eingriffselemente (272, 274, 350, 360, 450, 460) mit jeweils einer ringförmigen Geometrie, wobei die zwei oder mehr ersten Eingriffselemente und die zwei oder mehr zweiten Eingriffselemente jeweils stirnseitig benachbart zueinander angeordnet sind.

2. Verstelleinheit (202, 302) gemäß Anspruch 1, wobei
die Verstelleinheit als Pitchverstelleinheit ausgebildet ist, und
- der erste Flansch (215, 311) als Nabenflansch und der zweite Flansch als Rotorblattflansch ausgebildet ist, oder
- der erste Flansch (215, 311) als Rotorblattflansch und der zweite Flansch als Nabenflansch ausgebildet ist, und/oder
die Verstelleinheit als Azimutverstelleinheit ausgebildet ist, und
- der erste Flansch als Maschinenhausflansch und der zweite Flansch als Turmflansch ausgebildet ist, oder
- der erste Flansch als Turmflansch und der zweite Flansch als Maschinenhausflansch ausgebildet ist.

3. Verstelleinheit (202, 302) gemäß mindestens einem der vorhergehenden Ansprüche, wobei
die zweiten Kurvenabschnitte (454) an einer Außenumfangsfläche des jeweiligen zweiten Eingriffselements (272, 274, 350, 360, 450, 460) und die ersten Kurvenabschnitte (382, 482) an einer Innenumfangsfläche des jeweiligen ersten Eingriffselements (380) angeordnet sind, und die Anzahl an konvexen ersten Kurvenabschnitten (454) des jeweiligen ersten Eingriffselements die Anzahl an konkaven zweiten Kurvenabschnitten des jeweiligen zweiten Eingriffselements um mindestens eins übersteigt, und/oder
die zweiten Kurvenabschnitte (454) an einer Innenumfangsfläche des jeweiligen zweiten Eingriffselements (272, 274, 350, 360, 450, 460) und die ersten Kurvenabschnitte (382, 482) an einer Außenumfangsfläche des jeweiligen ersten Eingriffselements (380) angeordnet sind und die Anzahl an konkaven zweiten Kurvenabschnitten des jeweiligen griffselements die Anzahl an konvexen ersten Kurvenabschnitten (454) des jeweiligen ersten Eingriffselements um mindestens eins übersteigt.

4. Verstelleinheit (202, 302) gemäß mindestens einem der vorhergehenden Ansprüche, umfassend zwei oder mehrere Antriebseinheiten (230, 240, 250, 260, 330).

5. Verstelleinheit (202, 302) gemäß mindestens einem der vorhergehenden Ansprüche, wobei die Antriebseinheit (230, 240, 250, 260, 330) einen Motor (232, 242, 252, 262, 332) und/oder ein Getriebe (234, 244, 264, 334) und/oder eine Bremse umfasst.

6. Verstelleinheit (202, 302) gemäß Anspruch 4, wobei die zwei oder mehreren Antriebseinheiten (230, 240, 250, 260, 330), insbesondere Motoren (232, 242, 252, 262, 332), mit einem Synchronisierelement (270, 370) gekoppelt sind.

7. Verstelleinheit (202, 302) gemäß mindestens einem der vorhergehenden Ansprüche, wobei jedes erste Eingriffselement und/oder die ersten Kurvenabschnitte (382, 482) und/oder jedes zweite Eingriffselement (272, 274, 350, 360, 450, 460) und/oder die zweiten Kurvenabschnitte ein trockenlauffähiges Material umfassen oder aus diesem bestehen, wobei das trockenlauffähige Material vorzugsweise ein Faserepoxidharzverbundmaterial ist, und/oder
wobei jedes erste Eingriffselement und jedes zweite Eingriffselement eine Durchtrittsachse aufweist, wobei diese Durchtrittsachsen parallel angeordnet sind, wobei diese Durchtrittsachsen vorzugsweise parallel zu einer Rotationsachse (R) der Exzenterwelle ausgerichtet sind, und/oder
wobei das jeweilige erste Eingriffselement einen Innendurchmesser aufweist, der größer ist als ein Außendurchmesser des jeweiligen zweiten Eingriffselements, und/oder das jeweilige erste Eingriffselement einen Außendurchmesser aufweist, der kleiner ist als ein Innendurchmesser des jeweiligen zweiten Eingriffselements, und/oder
wobei jedes erste Eingriffselement als Bolzenring und die ersten Kurvenabschnitte als Bolzen ausgebildet sind, wobei die Bolzen vorzugsweise in Umfangsrichtung äquidistant voneinander beabstandet sind und ferner vorzugsweise eine Bolzenlängsachse aufweisen und derart angeordnet sind, dass die Bolzenlängsachsen im Wesentlichen parallel zu der Rotationsachse ausgerichtet sind.

8. Verstellvorrichtung für eine Azimutverstellung und/oder für eine Pitchverstellung einer Windenergieanlage (100), umfassend einen ersten ringförmigen Flansch und einen zweiten ringförmigen Flansch, die drehbar aneinander angeordnet sind, und eine Verstelleinheit (202, 302) gemäß mindestens einem der Ansprüche 1-7, wobei
- die Antriebseinheit (230, 240, 250, 260, 330) an dem ersten ringförmigen Flansch angeordnet ist,
- jedes erste Eingriffselement an einem Umfang des zweiten ringförmigen Flansches angeordnet ist, und
- jedes zweite Eingriffselement angeordnet und ausgebildet ist, bei Drehung der Exzenterwelle eine Relativbewegung zwischen dem ersten Flansch und dem zweiten Flansch zu bewirken.

9. Pitchverstellvorrichtung (200) zur Rotorblattverstellung eines Rotorblatts (108) eines Rotors (106) einer Windenergieanlage (100), umfassend
- einen im Wesentlichen ringförmigen Nabenadapter (210) mit einem ringförmigen Nabenflansch, wobei der Nabenadapter ausgebildet ist, an einer Nabe einer Windenergieanlage befestigt zu werden, oder einen Teil der Nabe bildet,
- einen im Wesentlichen ringförmigen Rotorblattadapter (220) mit einem ringförmigen Rotorblattflansch, wobei der Rotorblattadapter ausgebildet ist, an einem Rotorblatt (108) einer Windenergieanlage befestigt zu werden, oder einen Teil des Rotorblatts bildet,
- wobei der ringförmige Nabenflansch relativ zum ringförmigen Rotorblattflansch drehbar angeordnet ist,
- eine Verstelleinheit (202, 302) gemäß mindestens einem der Ansprüche 1-7,
- wobei der Nabenadapter im Wesentlichen koaxial zum Rotorblattadapter angeordnet ist,
- wobei die Antriebseinheit (230, 240, 250, 260, 330) an dem ringförmigen Nabenflansch angeordnet ist, und
- wobei jedes erste Eingriffselement (380) an dem ringförmigen Rotorblattflansch angeordnet ist,
wobei vorzugsweise der Nabenadapter (210) mittels eines Pitchlagers (212), insbesondere eines Wälzlagers, mit dem Rotorblattadapter (220) gekoppelt ist, und wobei jedes erste Eingriffselement (380) an einer Umfangsfläche, insbesondere an einer Innen- und/oder Außenumfangsfläche, des Pitchlagers angeordnet ist.

10. Azimutverstellvorrichtung (300) zur Windrichtungsnachführung eines Maschinenhauses einer Windenergieanlage (100), umfassend
- einen im Wesentlichen ringförmigen Maschinenhausadapter (310) mit einem ringförmigen Maschinenhausflansch, wobei der Maschinenhausadapter ausgebildet ist, an einem Maschinenhaus einer Windenergieanlage befestigt zu werden, oder einen Teil des Maschinenhauses zu bilden,
- einen im Wesentlichen ringförmigen Turmadapter (320) mit einem ringförmigen Turmflansch, wobei der Turmadapter ausgebildet ist, an einem Turm (102) einer Windenergieanlage befestigt zu werden, oder einen Teil des Turms zu bilden,
- wobei der Maschinenhausflansch relativ zum Turmflansch drehbar angeordnet ist,
- eine Verstelleinheit (202, 302) gemäß mindestens einem der Ansprüche 1-7,
- wobei der Turmadapter im Wesentlichen koaxial zum Maschinenhausadapter angeordnet ist,
- wobei die Antriebseinheit (230, 240, 250, 260, 330) an dem ringförmigen Maschinenhausflansch angeordnet ist, und
- wobei jedes erste Eingriffselement (380) an dem ringförmigen Turmflansch angeordnet ist.

11. Azimutverstellvorrichtung gemäß dem vorhergehenden Anspruch, wobei der Maschinenhausadapter (310) mittels eines Azimutlagers, insbesondere eines Wälzlagers, mit dem Turmadapter (320) gekoppelt ist, und wobei jedes erste Eingriffselement (380) an einer Umfangsfläche, insbesondere an einer Innen- und/oder Außenumfangsfläche, des Azimutlagers angeordnet ist.

12. Windenergieanlage (100), umfassend einen Windenergieanlagen-Turm (102), ein Maschinenhaus, einen Rotor (106) mit einer Nabe und mindestens einem Rotorblatt (108), mit
- einer Verstelleinheit (202, 302) gemäß mindestens einem der Ansprüche 1-7, und/oder
- mindestens einer Verstellvorrichtung gemäß Anspruch 8, und/oder
- mindestens einer Pitchverstellvorrichtung (200) gemäß Anspruch 9, und/oder
- einer Azimutverstellvorrichtung (300) gemäß den Ansprüchen 10-11.

13. Verfahren zur Rotorblattverstellung eines Rotorblatts (108) eines Rotors (106) einer Windenergieanlage (100), umfassend
- Bereitstellung eines Rotors mit mindestens einem Rotorblatt, wobei an dem Rotorblatt und an der Nabe eine Verstelleinheit (202, 302) gemäß mindestens einem der Ansprüche 1-7 und/oder eine Verstellvorrichtung gemäß Anspruch 8 angeordnet ist;
- Ansteuerung von mindestens einer Antriebseinheit (230, 240, 250, 260, 330), insbesondere einem Motor (232, 242, 252, 262, 332), um die Exzenterwelle (340) anzutreiben und jedes zweite Eingriffselement (272, 274, 350, 360, 450, 460) auf einer zykloiden Bewegungsbahn zu bewegen und damit das Rotorblatt um eine Längsachse zu drehen.

14. Verfahren zur Windrichtungsnachführung eines Maschinenhauses einer Windenergieanlage (100), umfassend
- Bereitstellen eines Turmes (102) und eines Maschinenhauses, wobei an dem Turm und an dem Maschinenhaus eine Verstelleinheit (202, 302) gemäß mindestens einem der Ansprüche 1-7 und/oder eine Verstellvorrichtung gemäß Anspruch 8 angeordnet ist;
- Ansteuerung von mindestens einer Antriebseinheit (230, 240, 250, 260, 330), insbesondere einem Motor (232, 242, 252, 262, 332), um die Exzenterwelle (340) anzutreiben und jedes zweite Eingriffselement (272, 274, 350, 360, 450, 460) auf einer zykloiden Bewegungsbahn zu bewegen und damit das Maschinenhaus um eine Längsachse zu drehen.

15. Verwendung einer Verstelleinheit (202, 302) gemäß mindestens einem der Ansprüche 1-7 und/oder einer Verstellvorrichtung gemäß Anspruch 8 als Pitchverstellvorrichtung (200) einer Windenergieanlage (100) oder als Azimutverstellvorrichtung (300) einer Windenergieanlage (100) oder zur Rotorblattverstellung eines Rotorblatts (108) eines Rotors (106) einer Windenergieanlage (100) oder zur Wind-richtungsnachführung eines Maschinenhauses einer Windenergieanlage (100).

## Claims

1. An adjustment unit (202, 302) for an azimuth adjustment and/or for a pitch adjustment of a wind turbine (100), comprising
- a drive unit (230, 240, 250, 260, 330) which can be arranged on a first annular flange (215, 311) and has an eccentric shaft (340),
- a first engagement element (380) which can be arranged on a circumference of a second annular flange which is arranged such that it can be rotated with respect to the first annular flange,
- a multiplicity of concavely and convexly configured first cam sections (382, 482) being arranged on a circumferential face of the first engagement element,
- a second engagement element (272, 274, 350, 360, 450, 460), having
o concave and convex second cam sections (454) which are arranged on a circumferential face (452) and correspond to the first cam sections, and
- the eccentric shaft being arranged rotatably on the second engagement element, in particular at an eccentric point of the second engagement element, and
- the first engagement element and the second engagement element being arranged and configured to carry out rolling movements between the first cam sections and the second cam sections
**characterized in that** the adjustment unit comprises:
- two or more first engagement elements (380) and/or two or more second engagement elements (272, 274, 350, 360, 450, 460), having an annular geometry, the two or more first engagement elements and the two or more second engagement elements being arranged adjacently on the end side, with respect to one another.

2. The adjustment unit (202, 302) as claimed in claim 1,
the adjustment unit being configured as a pitch adjustment unit, and
- the first flange (215, 311) being configured as a hub flange, and the second flange being configured as a rotor blade flange, or
- the first flange (215, 311) being configured as a rotor blade flange, and the second flange being configured as a hub flange, and/or
the adjustment unit being configured as an azimuth adjustment unit, and
- the first flange being configured as a motor casing flange, and the second flange being configured as a tower flange, or
- the first flange being configured as a tower flange, and the second flange being configured as a motor casing flange.

3. The adjustment unit (202, 302) as claimed in at least one of the preceding claims, the second cam sections (454) being arranged on an outer circumferential face of the respective second engagement element (272, 274, 350, 360, 450, 460), and the first cam sections (382, 482) being arranged on an inner circumferential face of the respective first engagement element (380), and the number of convex first cam sections (454) of the respective first engagement element exceeding the number of concave second cam sections of the respective second engagement element by at least one, and/or
the second cam sections (454) being arranged on an inner circumferential face of the respective second engagement element (272, 274, 350, 360, 450, 460), and the first cam sections (382, 482) being arranged on an outer circumferential face of the respective first engagement element (380), and the number of concave second cam sections of the respective second engagement element exceeding the number of convex first cam sections (454) of the respective first engagement element by at least one.

4. The adjustment unit (202, 302) as claimed in at least one of the preceding claims, comprising two or more drive units (230, 240, 250, 260, 330).

5. The adjustment unit (202, 302) as claimed in at least one of the preceding claims, the drive unit (230, 240, 250, 260, 330) comprising a motor (232, 242, 252, 262, 332) and/or a transmission (234, 244, 264, 334) and/or a brake.

6. The adjustment unit (202, 302) as claimed in claim 4, the two or more drive units (230, 240, 250, 260, 330), in particular motors (232, 242, 252, 262, 332), being coupled to a synchronizing element (270, 370).

7. The adjustment unit (202, 302) as claimed in at least one of the preceding claims, each first engagement element and/or the first cam sections (382, 482) and/or each second engagement element (272, 274, 350, 360, 450, 460) and/or the second cam sections comprising a material with a dry running capability and/or consisting of said material, the material with a dry running capability preferably being a fiber reinforced epoxy resin composite material, and/or
each first engagement element and each second engagement element having a passage axis which are arranged in parallel, said passage axes preferably being oriented, furthermore, parallel to a rotational axis (R) of the eccentric shaft, and/or each first engagement element having an internal diameter which is greater than an external diameter of each second engagement element, and/or each first engagement element having an external diameter which is smaller than an internal diameter of each second engagement element, and/or
each first engagement element being configured as a bolt ring, and the first cam sections being configured as bolts, the bolts preferably being spaced apart from one another equidistantly in the circumferential direction and, furthermore, preferably having a bolt longitudinal axis and being arranged in such a way that the bolt longitudinal axes are oriented substantially parallel to the rotational axis.

8. An adjustment apparatus for an azimuth adjustment and/or for a pitch adjustment of a wind turbine (100), comprising a first annular flange and a second annular flange which are arranged rotatably on one another, and an adjustment unit (202, 302) as claimed in at least one of claims 1-7,
- the drive unit (230, 240, 250, 260, 330) being arranged on the first annular flange,
- each first engagement element being arranged on a circumference of the second annular flange, and
- each second engagement element being arranged and configured to bring about a relative movement between the first flange and the second flange in the case of a rotation of the eccentric shaft.

9. A pitch adjustment apparatus (200) for the rotor blade adjustment of a rotor blade (108) of a rotor (106) of a wind turbine (100), comprising
- a substantially annular hub adapter (210) with an annular hub flange, the hub adapter being configured to be fastened to a hub of a wind turbine, or forming a part of the hub,
- a substantially annular rotor blade adapter (220) with an annular rotor blade flange, the rotor blade adapter being configured to be fastened to a rotor blade (108) of a wind turbine, or forming a part of the rotor blade,
- the annular hub flange being arranged such that it can be rotated relative to the annular rotor blade flange,
- an adjustment unit (202, 302) as claimed in at least one of claims 1-7,
- the hub adapter being arranged substantially coaxially with respect to the rotor blade adapter,
- the drive unit (230, 240, 250, 260, 330) being arranged on the annular hub flange, and
- each first engagement element (380) being arranged on the annular rotor blade flange,
the hub adapter (210) preferably being coupled to the rotor blade adapter (220) by means of a pitch bearing (212), in particular an anti-friction bearing, and each first engagement element (380) being arranged on a circumferential face, in particular on an inner and/or outer circumferential face, of the pitch bearing.

10. An azimuth adjustment apparatus (300) for tracking the wind direction with a motor casing of a wind turbine (100), comprising
- a substantially annular motor casing adapter (310) with an annular motor casing flange, the motor casing adapter being configured to be fastened to a motor casing of a wind turbine, or to form a part of the motor casing,
- a substantially annular tower adapter (320) with an annular tower flange, the tower adapter being configured to be fastened to a tower (102) of a wind turbine, or to form a part of the tower,
- the motor casing flange being arranged such that it can be rotated relative to the tower flange,
- an adjustment unit (202, 302) as claimed in at least one of claims 1-7,
- the tower adapter being arranged substantially coaxially with respect to the motor casing adapter,
- the drive unit (230, 240, 250, 260, 330) being arranged on the annular motor casing flange, and
- each first engagement element (380) being arranged on the annular tower flange.

11. The azimuth adjustment apparatus as claimed in the preceding claim, the motor casing adapter (310) being coupled to the tower adapter (320) by means of an azimuth bearing, in particular an anti-friction bearing, and each first engagement element (380) being arranged on a circumferential face, in particular on an inner and/or outer circumferential face, of the azimuth bearing.

12. A wind turbine (100), comprising a wind turbine tower (102), a motor casing, a rotor (106) with a hub and at least one rotor blade (108), with
- an adjustment unit (202, 302) as claimed in at least one of claims 1-7, and/or
- at least one adjustment apparatus as claimed in claim 8, and/or
- at least one pitch adjustment apparatus (200) as claimed in claim 9, and/or
- an azimuth adjustment apparatus (300) as claimed in claims 10-11.

13. A method for the rotor blade adjustment of a rotor blade (108) of a rotor (106) of a wind turbine (100), comprising
- providing of a rotor with at least one rotor blade, an adjustment unit (202, 302) as claimed in at least one of claims 1-7 and/or an adjustment apparatus as claimed in claim 8 being arranged on the rotor blade and on the hub;
- actuating of at least one drive unit (230, 240, 250, 260, 330), in particular a motor (232, 242, 252, 262, 332), in order to drive the eccentric shaft (340) and to move each second engagement element (272, 274, 350, 360, 450, 460) on a cycloid movement path, and therefore to rotate the rotor blade about a longitudinal axis.

14. A method for tracking the wind direction with a motor casing of a wind turbine (100), comprising
- providing of a tower (102) and a motor casing, and adjustment unit (202, 302) as claimed in at least one of claims 1-7 and/or an adjustment apparatus as claimed in claim 8 being arranged on the tower and on the motor casing;
- actuating of at least one drive unit (230, 240, 250, 260, 330), in particular a motor (232, 242, 252, 262, 332), in order to drive the eccentric shaft (340) and to move each second engagement element (272, 274, 350, 360, 450, 460) on a cycloid movement path, and therefore to rotate the motor casing about a longitudinal axis.

15. The use of an adjustment unit (202, 302) as claimed in at least one of claims 1-7 and/or an adjustment apparatus as claimed in claim 8 as a pitch adjustment apparatus (200) of a wind turbine (100) or as an azimuth adjustment apparatus (300) of a wind turbine (100) or for the rotor blade adjustment of a rotor blade (108) of a rotor (106) of a wind turbine (100) or for tracking the wind direction with a motor casing of a wind turbine (100).

## Revendications

1. Unité de réglage (202, 302) pour un réglage azimutal et/ou pour un réglage de calage d'une éolienne (100), comprenant
- une unité d'entraînement (230, 240, 250, 260, 330) pouvant être agencée au niveau d'une première bride annulaire (215, 311) avec un arbre excentrique (340),
- un premier élément de prise (380) pouvant être agencé au niveau d'une périphérie d'une deuxième bride annulaire qui est agencée de manière rotative par rapport à la première bride annulaire,
- dans laquelle une pluralité de premières sections incurvées (382, 482) réalisées de manière concave et convexe est agencée au niveau d'une surface périphérique du premier élément de prise,
- un deuxième élément de prise (272, 274, 350, 360, 450, 460), avec
- des deuxièmes sections incurvées (454) concaves et convexes correspondant aux premières sections incurvées, agencées au niveau d'une surface périphérique (452), et
- dans laquelle l'arbre excentrique est agencé de manière rotative au niveau du deuxième élément de prise, en particulier en un point excentrique du deuxième élément de prise, et
- dans lequel le premier élément de prise et le deuxième élément de prise sont agencés et réalisés afin de réaliser des mouvements de roulement entre les premières sections incurvées et les deuxièmes sections incurvées,
**caractérisée en ce que** l'unité de réglage comporte :
- deux ou plus premiers éléments de prise (380) et deux ou plus deuxièmes éléments de prise (272, 274, 350, 360, 450, 460) avec respectivement une géométrie annulaire, dans laquelle les deux ou plus premiers éléments de prise et les deux ou plus deuxièmes éléments de prise sont agencés respectivement côté avant de manière contigüe l'un à l'autre.

2. Unité de réglage (202, 302) selon la revendication 1, dans laquelle
l'unité de réglage est réalisée comme unité de réglage de calage, et
- la première bride (215, 311) est réalisée comme bride de moyeu et la deuxième bride est réalisée comme bride de pale de rotor, ou
- la première bride (215, 311) est réalisée comme bride de pale de rotor et la deuxième bride est réalisée comme bride de moyeu, et/ou
l'unité de réglage est réalisée comme unité de réglage azimutal, et
- la première bride est réalisée comme bride de nacelle et la deuxième bride est réalisée comme bride de tour, ou
- la première bride est réalisée comme bride de tour et la deuxième bride est réalisée comme bride de nacelle.

3. Unité de réglage (202, 302) selon au moins l'une quelconque des revendications précédentes, dans laquelle
les deuxièmes sections incurvées (454) sont agencées au niveau d'une surface périphérique extérieure du deuxième élément de prise (272, 274, 350, 360, 450, 460) respectif et les premières sections incurvées (382, 482) sont agencées au niveau d'une surface périphérique intérieure du premier élément de prise (380) respectif, et le nombre de premières sections incurvées (454) convexes du premier élément de prise respectif dépasse le nombre de deuxièmes sections incurvées concaves du deuxième élément de prise respectif d'au moins un, et/ou
les deuxièmes sections incurvées (454) sont agencées au niveau d'une surface périphérique intérieure du deuxième élément de prise (272, 274, 350, 360, 450, 460) respectif et les premières sections incurvées (382, 482) sont agencées au niveau d'une surface périphérique extérieure du premier élément de prise (380) respectif et le nombre de deuxièmes sections incurvées concaves du deuxième élément de prise respectif dépasse le nombre de premières sections incurvées (454) convexes du premier élément de prise respectif d'au moins un.

4. Unité de réglage (202, 302) selon au moins l'une quelconque des revendications précédentes, comprenant deux ou plusieurs unités d'entraînement (230, 240, 250, 260, 330).

5. Unité de réglage (202, 302) selon au moins l'une quelconque des revendications précédentes, dans laquelle l'unité d'entraînement (230, 240, 250, 260, 330) comporte un moteur (232, 242, 252, 262, 332) et/ou un engrenage (234, 244, 264, 334) et/ou un frein.

6. Unité de réglage (202, 302) selon la revendication 4, dans laquelle les deux ou plusieurs unités d'entraînement (230, 240, 250, 260, 330), en particulier des moteurs (232, 242, 252, 262, 332), sont couplées à un élément de synchronisation (270, 370).

7. Unité de réglage (202, 302) selon au moins l'une quelconque des revendications précédentes, dans laquelle chaque premier élément de prise et/ou les premières sections incurvées (382, 482) et/ou chaque deuxième élément de prise (272, 274, 350, 360, 450, 460) et/ou les deuxièmes sections incurvées comportent un matériau apte au fonctionnement à sec ou se composent de celui-ci, dans laquelle le matériau apte au fonctionnement à sec est de préférence un matériau composite de résine époxy et de fibre, et/ou
dans laquelle chaque premier élément de prise et chaque deuxième élément de prise présentent un axe de passage, dans laquelle ces axes de passage sont agencés parallèlement,
dans laquelle ces axes de passage sont orientés de préférence parallèlement à un axe de rotation (R) de l'arbre excentrique, et/ou
dans laquelle le premier élément de prise respectif présente un diamètre intérieur qui est supérieur à un diamètre extérieur du deuxième élément de prise respectif, et/ou le premier élément de prise respectif présente un diamètre extérieur qui est inférieur à un diamètre intérieur du deuxième élément de prise respectif, et/ou
dans laquelle chaque premier élément de prise est réalisé comme anneau de boulon et les premières sections incurvées sont réalisées comme boulon, dans laquelle les boulons sont de préférence espacés dans le sens périphérique à équidistance l'un de l'autre et présentent de plus de préférence un axe longitudinal de boulon et sont agencés de telle manière que les axes longitudinaux de boulon soient orientés sensiblement parallèlement à l'axe de rotation.

8. Dispositif de réglage pour un réglage azimutal et/ou pour un réglage de calage d'une éolienne (100), comprenant une première bride annulaire et une deuxième bride annulaire qui sont agencées de manière rotative l'une au niveau de l'autre, et une unité de réglage (202, 302) selon au moins l'une quelconque des revendications 1 - 7, dans lequel
- l'unité d'entraînement (230, 240, 250, 260, 330) est agencée au niveau de la première bride annulaire,
- chaque premier élément de prise est agencé au niveau d'une périphérie de la deuxième bride annulaire, et
- chaque deuxième élément de prise est agencé et réalisé afin de provoquer lors de la rotation de l'arbre excentrique un mouvement relatif entre la première bride et la deuxième bride.

9. Dispositif de réglage de calage (200) pour le réglage de pale de rotor d'une pale de rotor (108) d'un rotor (106) d'une éolienne (100), comprenant
- un adaptateur de moyeu (210) sensiblement annulaire avec une bride de moyeu annulaire, dans lequel l'adaptateur de moyeu est réalisé afin d'être fixé à un moyeu d'une éolienne, ou forme une partie du moyeu,
- un adaptateur de pale de rotor (220) sensiblement annulaire avec une bride de pale de rotor annulaire, dans lequel l'adaptateur de pale de rotor est réalisé afin d'être fixé à une pale de rotor (108) d'une éolienne, ou forme une partie de la pale de rotor,
- dans lequel la bride de moyeu annulaire est agencée de manière rotative par rapport à la bride de pale de rotor annulaire,
- une unité de réglage (202, 302) selon au moins l'une quelconque des revendications 1 - 7,
- dans lequel l'adaptateur de moyeu est agencé sensiblement coaxialement à l'adaptateur de pale de rotor,
- dans lequel l'unité d'entraînement (230, 240, 250, 260, 330) est agencée au niveau de la bride de moyeu annulaire, et
- dans lequel chaque premier élément de prise (380) est agencé au niveau de la bride de pale de rotor annulaire,
dans lequel de préférence l'adaptateur de moyeu (210) est couplé au moyen d'un palier de calage (212), en particulier d'un palier à roulement, à l'adaptateur de pale de rotor (220), et dans lequel chaque premier élément de prise (380) est agencé au niveau d'une surface périphérique, en particulier au niveau d'une surface périphérique intérieure et/ou extérieure, du palier de calage.

10. Dispositif de réglage azimutal (300) pour l'orientation du sens du vent d'une nacelle d'une éolienne (100), comprenant
- un adaptateur de nacelle (310) sensiblement annulaire avec une bride de nacelle annulaire, dans lequel l'adaptateur de nacelle est réalisé afin d'être fixé à une nacelle d'une éolienne, ou de former une partie de la nacelle,
- un adaptateur de tour (320) sensiblement annulaire avec une bride de tour annulaire, dans lequel l'adaptateur de tour est réalisé afin d'être fixé à une tour (102) d'une éolienne, ou de former une partie de la tour,
- dans lequel la bride de nacelle est agencée de manière rotative par rapport à la bride de tour,
- une unité de réglage (202, 302) selon au moins l'une quelconque des revendications 1 - 7,
- dans lequel l'adaptateur de tour est agencé sensiblement coaxialement à l'adaptateur de nacelle,
- dans lequel l'unité d'entraînement (230, 240, 250, 260, 330) est agencée au niveau de la bride de nacelle annulaire, et
- dans lequel chaque premier élément de prise (380) est agencé au niveau de la bride de tour annulaire.

11. Dispositif de réglage azimutal selon la revendication précédente, dans lequel l'adaptateur de nacelle (310) est couplé au moyen d'un palier azimutal, en particulier d'un palier à roulement, à l'adaptateur de tour (320), et dans lequel chaque premier élément de prise (380) est agencé au niveau d'une surface périphérique, en particulier au niveau d'une surface périphérique intérieure et/ou extérieure, du palier azimutal.

12. Eolienne (100) comprenant une tour d'éolienne (102), une nacelle, un rotor (106) avec un moyeu et au moins une pale de rotor (108), avec
- une unité de réglage (202, 302) selon au moins l'une quelconque des revendications 1 - 7, et/ou
- au moins un dispositif de réglage selon la revendication 8, et/ou
- au moins un dispositif de réglage de calage (200) selon la revendication 9, et/ou
- un dispositif de réglage azimutal (300) selon les revendications 10 - 11.

13. Procédé de réglage de pale de rotor (108) d'un rotor (106) d'une éolienne (100) comprenant
- la fourniture d'un rotor avec au moins une pale de rotor, dans lequel une unité de réglage (202, 302) selon au moins l'une quelconque des revendications 1 - 7 et/ou un dispositif de réglage selon la revendication 8 est agencé au niveau de la pale de rotor et au niveau du moyeu ;
- la commande d'au moins une unité d'entraînement (230, 240, 250, 260, 330), en particulier un moteur (232, 242, 252, 262, 332) afin d'entraîner l'arbre excentrique (340) et de déplacer chaque deuxième élément de prise (272, 274, 350, 360, 450, 460) sur une bande de déplacement cycloïdale et de tourner ainsi la pale de rotor autour d'un axe longitudinal.

14. Procédé d'orientation du sens du vent d'une nacelle d'une éolienne (100), comprenant
- la fourniture d'une tour (102) et d'une nacelle, dans lequel une unité de réglage (202, 302) selon au moins l'une quelconque des revendications 1 - 7 et/ou un dispositif de réglage selon la revendication 8 est agencé au niveau de la tour et au niveau de la nacelle ;
- la commande d'au moins une unité d'entraînement (230, 240, 250, 260, 330), en particulier un moteur (232, 242, 252, 262, 332) afin d'entraîner l'arbre excentrique (340) et de déplacer chaque deuxième élément de prise (272, 274, 350, 360, 450, 460) sur une bande de déplacement cycloïdale et de tourner ainsi la nacelle autour d'un axe longitudinal.

15. Utilisation d'une unité de réglage (202, 302) selon au moins l'une quelconque des revendications 1 - 7 et/ou d'un dispositif de réglage selon la revendication 8 comme dispositif de réglage de calage (200) d'une éolienne (100) ou comme dispositif de réglage azimutal (300) d'une éolienne (100) ou pour le réglage de pale de rotor d'une pale de rotor (108) d'un rotor (106) d'une éolienne (100) ou pour l'orientation du sens du vent d'une nacelle d'une éolienne (100).
